# EUROPEAN PATENT SPECIFICATION

(11) **EP 2 099 179 B1**
(45) Date of publication and mention of the grant of the patent: **06.10.2010**
(21) Application number: 09007414.7
(22) Date of filing: 18.11.2003
(51) Int. Cl.: H04L 12/56, H04L 29/06, H04W 28/22

(54) **Method and system for negotiating flow rate in a network**
Verfahren und System zur Datenratenverhandlung in einem Netz
Methode et systeme de negotiation de debit dans un réseau

(30) Priority: 07.04.2003 SE 0301053
(43) Date of publication of application: 09.09.2009
(62) Divisional of application: 03816585.8
(73) Proprietor: Telefonaktiebolaget L M Ericsson (publ), 164 83 Stockholm (SE)
(72) Inventor: Petersson, Justus, 116 41 Stockholm (SE); Westerlund, Magnus, 164 76 Kista (SE); Chermiakina, Svetlana, 00175 Rom (IT)
(74) Representative: HOFFMANN EITLE

(56) References cited:
- WO-A-00/51313

## Description

### FIELD OF THE INVENTION

The present invention relates to communications systems and methods, and more particularly, to controlling transmission of data bits in a bit transfer session.

### BACKGROUND OF THE INVENTION

Communication networks for packet based communication of information in the form of data bits are well known to the person skilled in the art. Certainly the Internet is the most widely known data communication network. A wide variety of communication protocols have been developed for handling data communication. Transport protocols are used for transferring data to the correct session. The transport protocols UDP (User Datagram Protocol) and TCP (Transmission Control Protocol) are used in the Internet. UDP is a connectionless protocol without flow control mechanisms, while TCP is a connection oriented protocol with flow control mechanisms that provides for reliable data transfer between two hosts.

The growing importance of mobile communication creates the demand to transfer data over wireless connections. The transfer of data over wireless links may give rise to many problems and difficulties not encountered when transferring data over fixed wired connections. The bandwidth over the air-interface is a scarce and limited resource. Therefore, it is of interest to make efficient use of available radio resources. The bandwidth that is available for a radio connection in a mobile communication network may vary quickly due to changes in the characteristics of the air-interface caused by e.g. fading dips or shadowing, or due redistribution of the assigned bandwidth to the users in a cell. The limited bandwidth over the air-interface and the changing bandwidth may make it difficult to provide acceptable quality-of-service (QoS) to an end-user residing in a mobile system. The limited bandwidth may for instance result in long latencies which the end-user experiences as annoying.

Many of prior art solutions to solve the QoS optimization problem for the end-user in a mobile network primarily for UDP based services such as Streaming/Video services. For instance in EP1126716, a solution is presented which is targeted for UDP based services. However these methods do not address the optimisation issue for applications based on transport protocols with flow control mechanisms, such as TCP.

In addition many of the prior art solutions are client-centric, that is, they make use of feedback messages from the end-user. A drawback with client-centric solutions is that it takes a fairly long time until the client, with certainty, detects a change in the available bandwidth on the connection over the air-interface. Since the radio environment is unstable the client is required to perform filtering or mean value calculations over long periods of time before it can send reliable feedback messages. Furthermore, the feedback messages from the end-user must be transmitted over a radio connection to the control system which adds additional delay to the input data to the control system.

WO 00/51313 discloses setting-up of voice calls via a called number translation point which performs a called party number translation.

### SUMMARY OF THE INVENTION

Embodiments of the present invention relates to addressing issues and "setting up" a rate control service.

The object is achieved by the subject-matter of the independent claims. Advantageous embodiments are defined in the dependent claims. Further examples are provided for facilitating the understanding of the invention.

Specifically, embodiments of the present invention set up a flow control or rate control mechanism for a bit transfer session between a client in a mobile system and an application server by means of a transport. The rate control mechanism may be associated with a number of rate control parameters. Disclosed are several embodiments that "set up" or configure the addressing for rate control mechanism within a network. Embodiments of the invention make use of feedback information from a radio resource managing entity to set an d update flow control parameters throughout the session. Once the rate control mechanism is configured or "set up" a radio resource managing entity can communicate with a network entity to optimize rate control parameters, which allows for enhanced QoS and efficient use of available radio resources.

One advantage of the present invention is that it "sets up" rate control services so that network entities can optimally balance the offered traffic over the air-interface with the back-end for person-to-content and person-to-person services over the packet switched domain leading to a better utilization of scarce radio resources.

Another advantage of some of the embodiments of the present invention is that since the feedback information that is used for controlling the rate control parameters may be provided continuously throughout the session from the radio resource managing entity which is located in the radio access network, the flow control parameters may be updated based on current information. This allows for better parameter settings compared to prior art solutions where the flow control parameters are set only once at the beginning of the session based on historical data from previous sessions. Since the feedback information used in the present invention is communicated from the radio access network to the network entity controlling the flow control parameters the feedback information will not be subjected to the as much delay as in the client-centric solutions discussed above. The radio access network detects changes in the available bandwidth of the session faster than the client does and there is no need to communicate the feedback information over the air-interface.

The continuous monitoring and updating of flow control parameters according to some aspects of the present invention allows for good QoS throughout the entire session and not just at the beginning of the session. In prior art solutions where parameter settings are not updated during the session, there is a risk that the QoS may deteriorate during the session if the radio conditions experienced by the session changes. Radio conditions may change very rapidly and thus it is more important to update parameter settings of sessions involving an air interface than those of sessions which are entirely based on wired connections.

A further advantage of some embodiments of the present invention is that they makes use of network feedback for each session separately which is used to update the flow control parameters of each session individually. Thus the parameter settings may be specifically adapted to optimize the QoS for each session. According to some prior art solutions flow control is handled for groups of sessions. Even though the prior art solutions allows few flow control decisions compared to the invention, these solutions may lead to poor quality-of-service for a particular client who is locally experiencing radio conditions that are much worse than those of other clients in the same group.

Since some embodiments of the present invention allows for quicker and more accurate adaptation of the throughput to the current available bandwidth on the air-interface, the risk for overflow in the radio resource managing entity, such as the RNC or BSC is reduced. Thus an additional advantage of the present invention is that the sizes of buffers in the radio resource managing entity may be minimized.

Further advantages and objects of embodiments of the present invention will become apparent when reading the following detailed description in conjunction with the drawings. For instance, embodiments that may be used in Person-to-Content (P2C) situations are also equally applicable in Person-to-Person (P2P) services and vice versa. Examples illustrating embodiments of the present invention are first presented in the context of P2C situations, then examples are presented in the context of P2P scenarios.

### BRIEF DESCRIPTION OF THE DRAWINGS

Fig. 1 is a schematic block diagram illustrating a communication session between a client and an application server according to prior art.
Fig. 2 is a schematic block diagram illustrating a communication session between a client and an application server employing aspects of the present invention.
Fig. 3 is a schematic diagram illustrating a comparison of the throughput of the sessions illustrated in Fig. 1 and Fig. 2.
Fig. 4a is a high level schematic block diagram illustrating an UMTS system employing aspects of the present invention for a person-to-content communications.
Fig. 4b illustrates how the Open System Interconnection (OSI) reference model may be applied to the system illustrated in Fig. 4a.
Fig. 5 is a flow diagram illustrating transmission rate adaptation based on network feedback according to some embodiments of the present invention.
FIG. 6 is a signaling diagram illustrating a general "set up" procedure configuring the RNC to send Rate Control indications to an application server during a specific session.
Fig. 7 is a signaling diagram illustrating a sniffing procedure which may be used in various aspects of the present invention.
Fig. 8 is a signaling diagram illustrating an alternative sniffing procedure which may be used in various aspects of the present invention.
Fig. 9 is a signaling diagram illustrating a signaling diagram where a mobile station (UE) sets up the RNC with required parameters for rate control service. The RNC may or may not have an IP address.
Fig. 10 is a signaling diagram illustrating a setup procedure where a proxy sets up the RNC with required parameters for a rate control service. The RNC does not have an IP address.
Fig. 11 is a signaling diagram illustrating a setup procedure where a proxy sets up the RNC with required parameters for a rate control service. The RNC has an IP address.
Fig. 12 is a high level schematic block diagram illustrating an UMTS system employing aspects of the present invention for person-to-person communications or, alternatively, person to fixed phone communications.
Fig. 13 is a signaling diagram illustrating a setup procedure where the mobile units set up the appropriate RNC with required parameters for a rate control service. The RNCs do not have an IP address.
Fig. 14 is a signaling diagram illustrating a setup procedure where the mobile units set up the appropriate RNC with required parameters for a rate control service. The RNCs have IP address.
Fig. 15 is a signaling diagram illustrating a setup procedure where SIP-proxies set up the appropriate RNC with required parameters for a rate control service. The RNCs do not have IP addresses.
Fig. 16 is a signaling diagram illustrating a setup procedure where SIP-proxies set up the appropriate RNC with required parameters for a rate control service. The RNCs have IP addresses.
Fig. 17 is a signaling diagram illustrating a setup procedure where the mobile unit sets up the appropriate RNC with required parameters for a rate control service. The RNC may or may not have an IP address.
Fig. 18 is a signaling diagram illustrating a setup procedure where a media gateway sets up the appropriate RNC with required parameters for a rate control service. The RNC does not have an IP address.
Fig. 19 is a signaling diagram illustrating a setup procedure where a media gateway sets up the appropriate RNC with required parameters for a rate control service. The RNC has an IP address.

### DETAILED DESCRIPTION

The present invention now will be described more fully hereinafter with reference to the accompanying drawings, in which preferred embodiments of the invention are sown. This invention may, however, be embodied in many different forms and should not be construed as limited to the embodiments set forth herein; rather, these embodiments are provided so that this disclosure will be thorough and complete, and will fully convey the scope of the invention to those skilled in the art. In the drawings, like numbers refer to like elements.

For the purposes of the present disclosure, various acronyms are used, and the definitions of which are listed below:
- 3GPP: Third Generation Partnership Project
- BSC: Base Station Controller
- CDMA200: Code Division Multiple Access. An access technology that combines each phone call with a code that only one cellular phone extracts from the air.
- DL: DL bit rates
- GGSN: Gateway GPRS Support Node. A wireless gateway in a GPRS network that allows mobile cell phone users to access the packet data network. It provides an interface towards the external IP packet networks and translates data formats, signaling protocols and address information to permit communication between different networks.
- GPRS: General Packet Radio Service. The data service for GSM networks. It provides both circuit switched and packet switched bearer.
- GTP: GPRS Tunneling Protocol. A layer 3 tunneling protocol used between the SGSN and GGSN.
- GTP-U: A GTP user tunnel. For every mobile station, one GTP-C tunnel is established for signaling and a number of GTP-U tunnels, one per PDP context (i.e., session) are established for user traffic.
- HTTP: Hypertext Transport Protocol
- IMSI: International Mobile Subscriber Identity. 50-bit field that identifies a mobile subscriber's home country and carrier in a GSM network and is stored in the Subscriber Identity Module (SIM).
- IP: Internet Protocol
- lu UP: lu User Plane, i.e., the interface between the RNC and the Core Network (SGSN node)
- Layer 2: Provides a means for synchronizing the bit stream to and from the physical layer and for detection of errors due to transmission problems (e.g., noise and interference).
- MSISDN: Mobile Station ISDN. The telephone number of a mobile station.
- NAT: Packet Data Protocol. GPRS term for a range of protocols (e.g., IP and PPP) that support the transfer of packet data over a 3G wireless cellular network.
- OSI: Open System Interconnection
- P2C: Person-to-content
- P2P: Person-to-person
- PDP: Packet Data Protocol. GPRS term for a range of protocols (e.g., IP and PPP) that support the transfer of packet data over a 3G wireless cellular network.
- PDP: A PDP context is a logical association between a MS (Mobile Station) and
- Context: PDN (Public Data Network) running across a GPRS network. The PDP context is an information set (e.g., a QoS profile) held in the mobile and GSNs for a PDP address. The context defines aspects such as routing, quality of service, security, billing, etc.
- QoE: Quality of End User Experience
- QoS: Quality of Service
- RAB: Radio Access Bearer
- RADIUS: An AAA (authentication, authorization, and accounting) protocol.
- RAN: Radio Access Network
- RANAP: Radio Access Network Application Part - an intermediate layer protocol used by the RNC and CN.
- RC: Rate Control
- RC ID: Rate Controller Identifier
- RNC: Radio Network Controller
- RRC: Radio Resource Control (RRC) - The RRC Interface is used for configuration, reconfiguration, relocation, and release of individual PDCP entities related to different radio bearers.
- RTSP: Real Time Streaming Protocol - An application-level protocol for control over the delivery of data with real-time properties. RTSP provides an extensible framework to enable controlled, on-demand delivery of real- time data, such as audio and video, using the Transmission Control Protocol (TCP) or the User Data Protocol (UDP).
- SDP: Session Description Protocol
- SGSN: Serving GPRS Support Node. GPRS node that handles data to and from the MS, maintains MS location information, and communicates between the MS and the GGSN. It provides packet routing for all GPRS subscribers located at a specific area.
- SIP: Session Initiation Protocol. An IETF IP protocol for VolP (packetized voice) call processing. It performs session set up and signaling for a variety of features.
- SM: Session Management
- TCP: Transmission Control Protocol
- TEID: Tunnel Endpoint Identifier
- TFT: Traffic Flow Template. Allowing the GGSN to classify packets received from the external network into the proper PDP context. Used to determine the QoS that applies to a specific packet.
- T-PDU: Transport PDU (Protocol Data Unit)
- UDP: User Data Protocol
- UE: User Equipment
- UMTS: Universal Mobile Telecommunications System. Third generation wireless standard for supporting data transfer rates of 144 kbs (vehicular), 384 kbs (pedestrian), or up to 2 Mbs in buildings.
- WCDMA: Wideband Code Division Multiple Access - is one of the main technologies for the implementation of third-generation (3G) cellular systems. It is base on radio access technique proposed by ETSI Alpha group and the specifications was finalized 1999.
- WLAN: Wireless Local Area Network

The present invention is applicable to person-to-content (P2C) and person-to-person (P2P) packet switched services in a mobile system, and particularly to such services which are based on a transport protocol with a flow control mechanism. Such services comprise packet communication between a user equipment of an end-user and an application server. The mobile system includes a mobile network such as a WCDMA, CDMA2000, Wireless LAN or GPRS network in which the user equipment resides. An example of a transport protocol with a flow control mechanism is the TCP. The flow control mechanism of the TCP comprises a number of flow control parameters as is well known to a person skilled in the art. Examples of TCP flow control parameters are window size and segment size. The transmission of data bits over a TCP connection may be controlled by means of changing the TCP flow control parameters.

When a communication session is set up between the mobile user equipment and the application server, the available bandwidth over the air interface will normally be the limiting factor on the bit rate of the session. The characteristics of the air-interface, e.g. fading dips and shadowing, may have negative consequences for the end-user. This is especially true for applications that use the TCP protocol as a transport bearer. For instance, a long latency over the air-interface may trigger the TCP congestion avoidance mechanism, leading to less bandwidth for the session and resulting in a very lousy performance for the end-user. On the other hand, if the end-user will temporarily get increased bandwidth over the air-interface, this may most likely not speed up the TCP connection to the same extent, implying that scarce radio resources will not be utilised. Since the radio resources on the air interface are scarce resources which it is of interest to utilize as efficiently as possible, a more efficient use of the available radio resources will most likely improve the quality-of-service of the end-users.

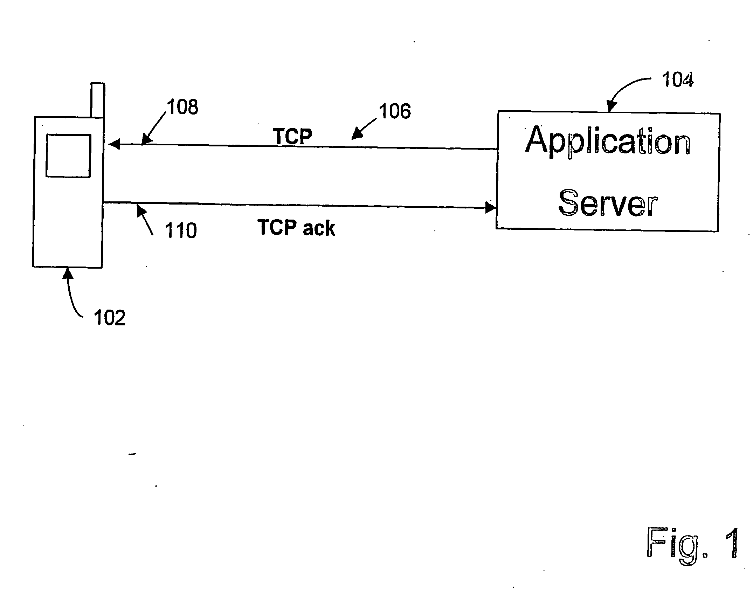

Fig. 1 illustrates schematically a communication session between a client in user equipment 102 and an application server 104 according to prior art. Here the application server 104 is a Web Server. The session is set up by means of a TCP link 106 between the client 102 and the application server 104. When the client is browsing or downloading information from the application server 104, the client acknowledges the reception of data which thereby indicates the quality of the reception. The application server 104 uses this information from the acknowledgments to adapt TCP transmission parameters, such as e.g. window size or segment size, to the transmission conditions over the TCP link.

A problem with the approach in Fig. 1 is that when the transmission link includes a radio connection there is a risk that bad radio connection conditions including many retransmissions are misinterpreted by the application server 104 as congestion, thereby triggering the TCP congestion avoidance mechanism. Also, the radio conditions may change very fast, but the feedback in the form of acknowledgements comes relatively late, which further reduces the ability of the server to adequately react to changed radio transmission conditions. These are drawbacks that occur since the TCP transmission mechanism was not designed for radio transmission.

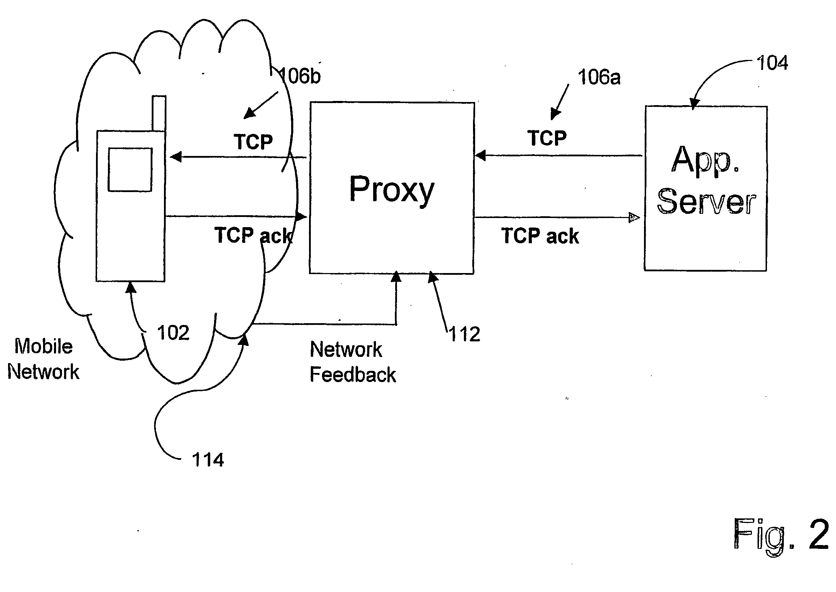

Fig. 2 is a schematic block diagram illustrating the basic principles of a communication session where one aspect of the present invention is used. A communication session is set up between the client 102 and the application server 104 via a proxy 112 by means of TCP connections 106a and 106b. The TCP connection 106b involves transmission over a radio link in a mobile network 114. The mobile network reports network feedback data regarding the quality-of-service of the radio link transmission to the proxy. The proxy uses the network feedback data to change TCP parameter settings, such as TCP window size and segment size, of the TCP connection 106b. The network feedback may also be used to decide how to acknowledge reception to the application server over the TCP connection 106a.

The network feedback data that is reported to the proxy is information about the bandwidth that the radio resource managing entity of the mobile network has decided that the session is allowed to use over the air-interface.

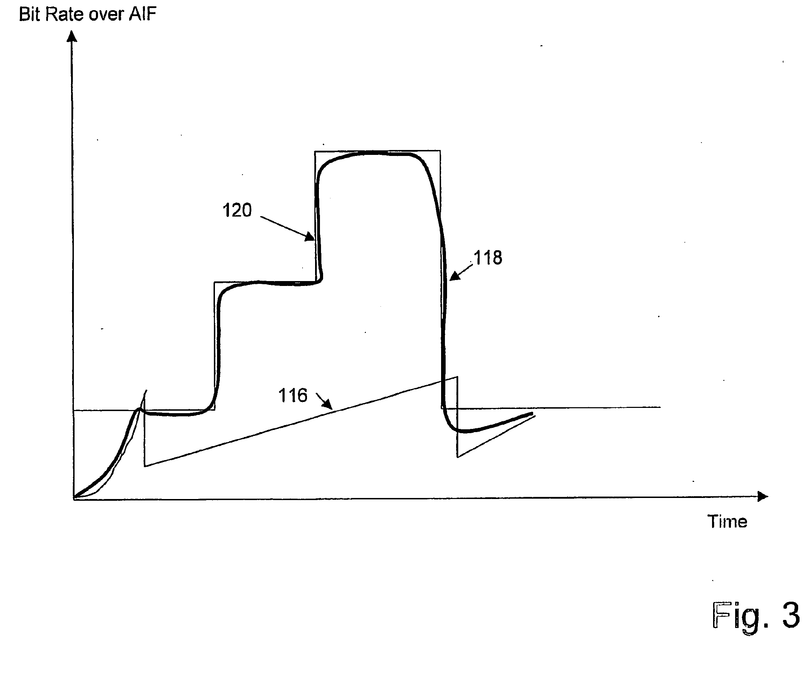

Fig. 3 is a schematic diagram illustrating a comparison of the throughput rate using arrangements according to Fig. 1 and Fig. 2 respectively. The rectangular curve 120 illustrates the bandwidth that the radio resource managing entity of the mobile network has decided that the session is allowed to use over the air-interface. Curve 116 illustrates the throughput curve of the prior art arrangement in Fig. 1 and the bold curve 118 illustrates the throughput curve of the arrangement according to the invention in Fig. 2.

The curve 116 illustrates that the transmission rate first increases exponentially, until the maximum available bit rate over the air interface has been reached. When this occurs, the client starts reporting "Not received", which is interpreted by the application server 104 in Fig. 1 as congestion. Thus the application server applies the congestion avoidance mechanism whereby the transmission rate is reduced substantially. Then the application server starts to very slowly increase the transmission rate linearly. This behaviour of the application server may not be in conformity with the actual situation over the radio link.

In contrast, in Fig. 2, the proxy 112 (or the server 104 in an embodiment where the network feedback is directly provided to the server) may take more adequate and faster measures since it receives radio link information earlier - which provides a more accurate description of the radio transmission conditions. This is illustrated by the bold curve 118, which illustrates that the throughput rises faster when the network feedback according to the present invention is used and that the throughput overall is higher leading to better quality-of-service for the end-user. An increase in the available bandwidth over the air interface will quickly result in greater throughput when the arrangement in Fig. 2 is used.

Although Fig. 2 illustrates use of the invention for a session that is set up via a proxy and two TCP connections 106a and 106b, the use of a proxy is not essential to the invention. If the session is set up directly between the application server and the client, without an intermediate proxy, the invention may be implemented such that the network feedback is provided directly to the application server. The application server can then use the network feedback to adequately adapt the TCP parameters of the session. In addition to the Person-to-Content (P2C) situations described above, aspects of the present invention are also equally applicable in Person-to-Person (P2P) services.

### Person-to-Content Services:

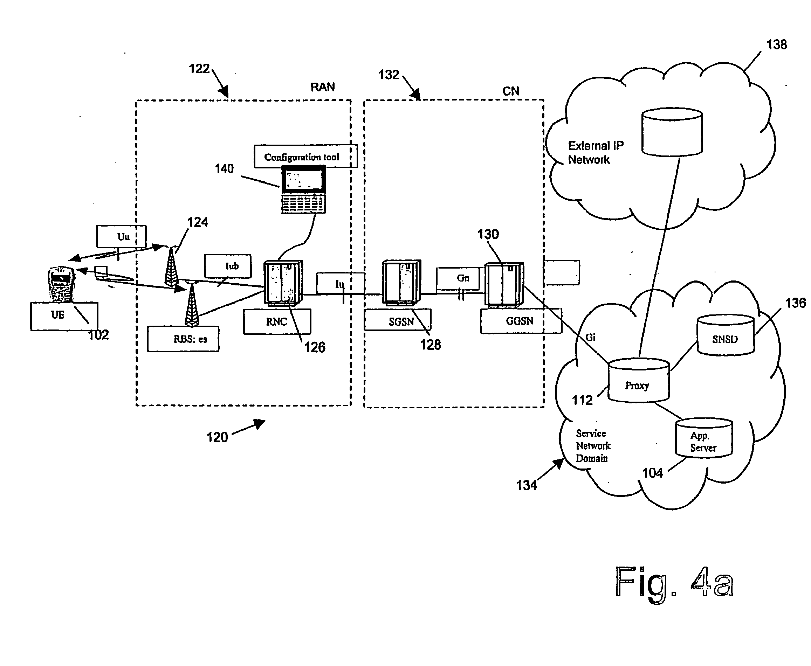

Fig. 4a illustrates an embodiment of the present invention in a UMTS system 120 in a Person-to-Content (P2C) scenario. The system includes a radio access network 122 comprising a number of Radio Base Stations (RBSs) 124 and at least one Radio Network Controller (RNC) 126. The system further includes a Serving GPRS Support Node (SGSN) 128 and a Gateway GPRS Support Node (GGSN) 130, which are nodes in a Core Network (CN) 132 that provides a connection between the radio access network 122 and a Service Network (SN) 134. The Service Network 134 includes the application server 104 and the proxy 112. The proxy may be in communication with a Service Network Session Database (SNSD) 136, and an external IP network 138.

As explained above, the present invention provides improved means for controlling the transmission rate of the session, which allows for end-user quality-of-service optimization. Information about the allowed bandwidth over the air-interface used for the session may be sent from the RNC 126 to the proxy 112. For instance, if the proxy 112 has access to the currently allowed bit rate over the air-interface, the proxy has the ability to set the TCP flow control parameters such as e.g. the segment/window sizes to optimally fit the radio resource situation. Thus, the proxy 112 may have the capabilities of optimising the end-user's quality-of-service on the basis of the obtained bandwidth information from the RNC 126 and its own internal algorithms.

In one aspect of the embodiment, the RNC 126 may be pre-configured to manage the RC service. The RNC 126 may be hard-coded or configured with data that is necessary for the service by a configuration tool 140. Additionally, the RNC 126 may be partially configured with the aid of the user equipment (UE), or the application server, or the application server proxy, or the Media Gateway. Typically, the receiver of the Rate Control indications is the proxy 112.

Examples of such configuration data are:
Receiver's (Proxy's) IP address and Port number.
   The traffic class for which the RC service shall be applicable (e.g. Streaming and Interactive).
   Which users that shall have the service. (This list may be based on subscription services).

Furthermore, a parameter setting unit, which updates session parameters based on the network feedback, may be adapted to be able to receive and interpret the network feedback and to be able to adapt the parameters based on the received network feedback. It will be apparent to the person skilled in the art how the present invention may be implemented using known hardware and software means. The network feedback mechanism according to the present invention may be implemented using a separate protocol created for this purpose.

In a streaming scenario, the Rate Control service may be setup for every media stream in the SDP description (e.g., one RC service setup for the speech stream and one RC service setup for the video stream), all media stream in the SDP description as a whole, or any combination thereof.

In several embodiments, the SNSD 136 may be connected to the proxy 112 and communicates the bandwidth information from the RNC 126 to the proxy 112. In some embodiments, the SNSD 136 may be arranged store the bandwidth information from the RNC 126. When the UE 102 has activated a packet data protocol (PDP) context, this PDP context includes among other information an access point name (APN). The APN gives a logical connection between the UE 102 and the proxy 112. The proxy 112 or the SNSD 136 may, for instance, store the following information about the UE 102:
IP-address of the UE
bit rate
other information, e.g., the user's MSISDN, which may be of interest for other purposes than the present invention.

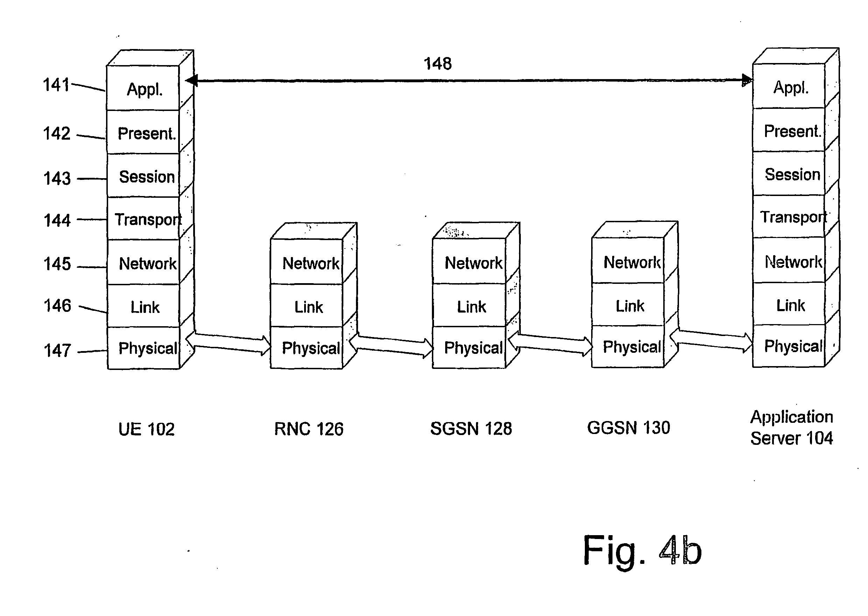

Referring back to Figs. 2 and 4, a bit transfer session may be set up between the application server 104 in the service network 134 and a client on a User Equipment (UE) 102 by means of connections 106a, 106b that pass through the proxy 112, the CN 132, and the radio access network 122. Alternatively the session may be set up between the UE 102 and an application server 104 in an external network 138 with which the proxy communicates. The connections 106a, 106b may for instance be TCP connections or connections based on another type of transport protocol with some kind of flow control mechanism.

As is well known in the art, the Open System Interconnection (OSI) reference model divides communication between network devices into seven smaller "layers." Each layer has a predetermined set of functions which are performed for the communication to occur. Fig. 4b illustrates the OSI reference model establishing a communication link from a node, for example UE 102 through intermediary nodes (such as the RNC 126, the SGSN 128, and the GGSN 130) to the application server 104.

An application layer 141 identifies and establishes the availability of intended communication partners, synchronizes cooperating applications, and establishes agreement on procedures for error recovery and control of data integrity. A presentation layer 142 is "below" the application layer 141 and ensures that information sent by the application layer of one system will be readable by the application layer of another system. A session layer 143 lies below the presentation layer 142 and establishes, manages, and terminates sessions between applications. Sessions consist of dialogue between two or more presentation entities.

Below the session layer 143 is a transport Layer 144. The transport layer 144 the transport layer provides mechanisms for the establishment, maintenance, and orderly termination of virtual circuits and information flow control. A network layer 145 is below the transport layer. The network layer 145 is a layer that provides connectivity and path selection between two end systems that may be located on geographical diverse subnetworks. A link layer 146 provides transit of data across a physical link In so doing, the link layer 146 is concerned with physical (as opposed to network, or logical) addressing, network topology, line discipline (how end systems will use the network link), error notification, ordered delivery of frames, and flow control. Below the link layer 146, is a physical layer 147 which defines the electrical, mechanical, procedural, and functional specifications for activating, maintaining, and deactivating the physical link between end systems.

The boundary between the session layer 143 and the transport layer 144 is generally thought of as the boundary between application-layer protocols and lower-layer protocols. Whereas the application, presentation, and session layers are concerned with application issues, the lower four layers are typically concerned with data transport issues.

In some embodiments, there may be a flow or transfer of "application data" 148, for example, web or streaming traffic between the UE 102 and the application server 112. This can be thought of as a "High Level" data transfer. As will be described in detail below, the RNC 126 can detect changed system conditions over the UE-RNC link, which occurs at the physical level 147. The RNC 126 may update the proxy 112 about state changes over the UE-RNC link (e.g., wireless link). The state change information may then be used by the application server 104 to balance the data flow originating from itself towards the UE 102 to match the available capacity over the UE-RNC link. (The state information from the RNC to the proxy 112 may be transparent, i.e. invisible, to the SGSN 128 and the GGSN 130). However, in order for this process to work, the RNC needs to know the address of the application server 112 so the RNC can send the state information to the application server 104.

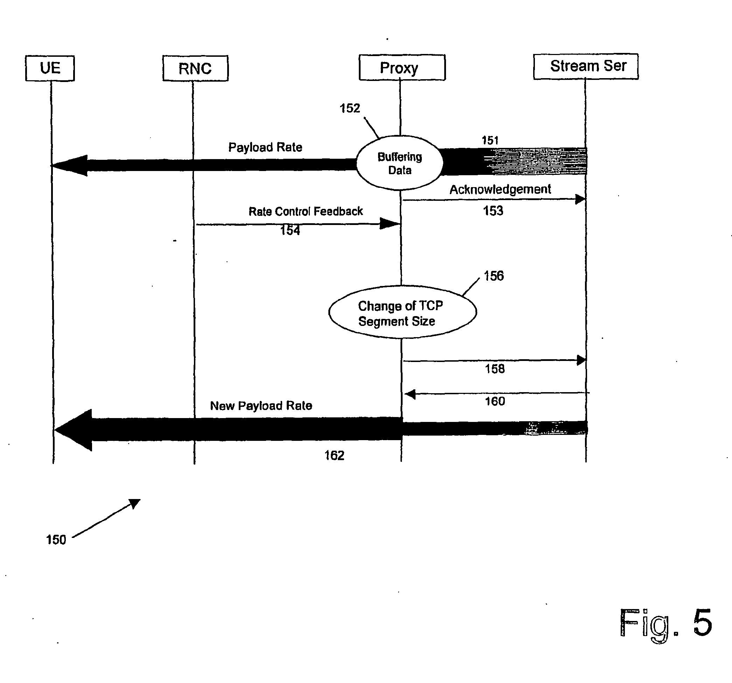

Fig. 5 illustrates a general call flow procedure 150 using TCP adaptation wherein the TCP link between the UE and the application server has been split in two parts: (1) between the application server 104 and the proxy 112, and (2) between the proxy 112 and the UE 102.

The initial conditions for the example illustrated in Fig. 5 are these: The application server sends payload at a certain bit rate according to the network protocol, such as TCP mechanisms. Due to limitations with the air-interface, the proxy 112 is not allowed to relay the incoming payload at the same pace as it arrives. Therefore, the proxy 112 temporarily stores the incoming payloads in a cache (not shown) and acknowledges the Application Server by sending acknowledgements (ACKs) as if the payloads had been received by the client By doing so one decreases the risk that the TCP congestion control mechanism will be employed. At the same time one minimises the total download time for the requested object/file. When conditions with the air-interface changes, the RNC can notify the proxy, who then notifies the application server so that a new bit transfer rate can be employed.

According to the present invention the following illustrative steps are performed in the example of Fig. 5:
Step 151: The application server is transmitting data at a predetermined rate to the proxy.
Step 152: The proxy cannot relay the data to the UE 102 at the same rate because of limitations with the air interface, so the proxy buffers the data.
Step 153: The proxy sends acknowledgement messages to the application server to avoid the activation of a congestion control mechanism.
Step 154: The conditions of the air interface improve. The radio resource managing entity, e.g. the RNC 126, has discovered that the system now has spare capacity and thus informs the proxy 112 (or a database in communication with the proxy) that a specific session may enjoy a new and higher bit rate via a rate control feedback message. So, the radio resource managing entity sends a lower layer message to the proxy in the form of a Rate Control Feedback Message.
Step 156, the proxy's internal wireless optimization algorithms adapt to the new situation by determining an optimal rate. For instance, in a TCP system, the proxy determines an optimal TCP segment size.
Step 158, the Proxy 112 may then send the application server an application layer message specifying a new bit rate (or segment size).
Step 160, the application server acknowledges the message by sending an application layer acknowledgement and begins sending at a new rate, step 162.

Note that the procedure 150 is a "snapshot" of the behaviour to the network feedback based rate adaptation according to one aspect of the present invention. During a whole session the procedure 150 may be employed many times as the allowed bit rate of the session over the air interface varies.

When implementing the present invention in existing communication systems, existing software and/or hardware may have to be modified as will be understood by the person skilled in the art. In most cases the modifications will mainly be software modifications. For instance, the RNC 126 may be adapted so that it can communicate the network feedback according to the present invention to another unit, such as the proxy 112 or the application server 104. In the embodiment illustrated in Fig. 4a, the RNC 126 may be informed about the proxy's 112 IP address upon i) configuration or ii) session set-up. By doing so, the RNC 126 can send information the about valid bit rate directly to the proxy 112 without any interrogation from an intermediate node.

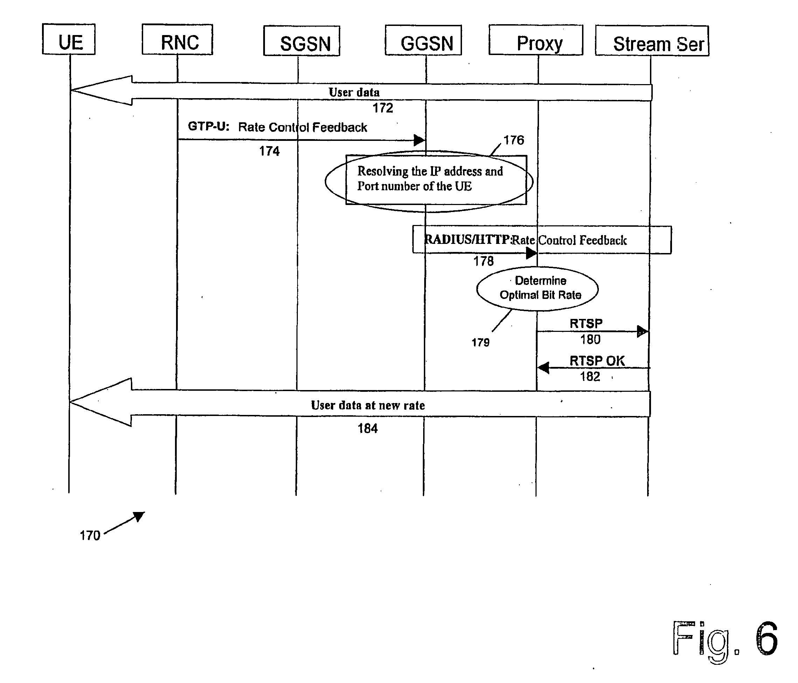

Fig. 6 is a call flow diagram illustrating a procedure 170 that is similar to the procedure 150 described with reference to Fig. 5. However, the procedure 170 illustrates how the addressing issue is solved when the RNC is configured to send rate control indicators for a specific session. The procedure 170 configures the RNC to send bandwidth (i.e., rate control) indicators to the proxy via the GGSN for a specific traffic class. The application server 104 sends data at a certain bit rate according to the network protocol mechanisms. At some point during the transmission, the RNC 126 determines that a new bit rate is possible and sends an IP message towards the Proxy 112. However, since the Proxy 112 does not know which session (i.e., which UE) the Rate Control message applies, the procedure needs to resolve the UE's IP address and Port number.

The resolution may be accomplished via a GTP-U Tunnel Endpoint Identifier in a T-PDU message and TFT filter mapping. The GGSN may employ procedures to determine the UE's IP address (or alternatively attach the MSISDN or IMSI to the message). In the latter case, the MSISDNJIMSI will be resolved and mapped to a UE IP address by the Service Network's session database, which has an interface to the Proxy (not shown in the Fig. 6).

The following steps may be performed in the procedure 170 illustrated in Fig. 6:
Step 172: The application server 104 sends data at a certain bit rate according to the network protocol mechanisms.
Step 174: The RNC 126 sends an intermediate layer rate control feedback message towards the Proxy (e.g., the RNC tunnels a Rate Control message to the GGSN 130 over the GTP-U layer.)
Step 176: The GGSN 130 intercepts the message and determines the IP address and port number of the UE 102 by using the GTP-U Tunnel Endpoint identifier (TEID) in a T-PDU message and TFT filter mapping as explained in 3GPP TS 24.008.
Step 178: the GGSN 130 relays the Rate Control indication to the Proxy via a network layer level message (e.g., a RADIUS/HTTP message). This message includes the UE's IP address and Port number. Thus the Rate Control message contains the newly employed bandwidth over the air-interface and the source's (UE's) IP address and Port number. By including the UE's IP address and Port number, the Proxy can identify the specific application session for which the message is applicable.
Step 179: The proxy determines an optimal bit rate based on the information in the rate control message.
Step 180: The Proxy 112 may then send the application server an application layer message, which specifies a new bit rate. In this example, the application layer message is an RTSP message.
Step 182, the application server acknowledges the RTSP message and begins sending at a new rate, step 184.

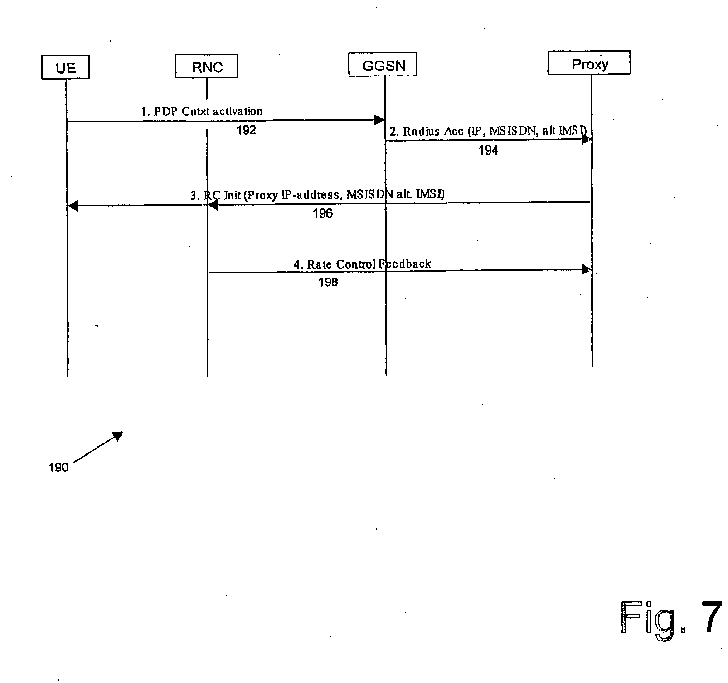

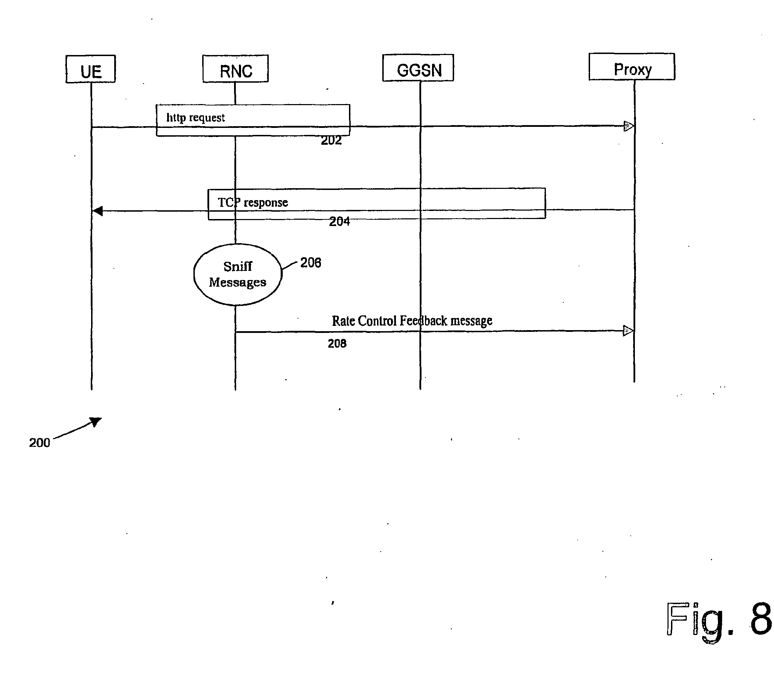

In procedure 170 discussed above, the RNC provides the UE's IP-address and port number in the rate control feedback message 174. Therefore, the RNC first determines the UE's IP-address (or alternatively, attach the MSISDN or IMSI number to the message. In the latter case, the MSISDN/IMSI will be resolved and mapped to the UE IP address by the service network's session database). Two methods of determining the UE's IP-address are discussed in relation to Figs. 7 and 8.

Fig. 7 illustrates a "sniffing" procedure 190 at the PDP context setup so that the RNC can initiate Rate Control services. "Sniffing" as used in this disclosure means that the RNC listens to the user data traffic from UE and intercepts messages that are marked appropriately. For example there may be a rate control identification (RC ID) field in the lu UP protocol or destination port number in IP header which alerts the RNC that such messages may be subject to a rate control service. When the end-user activates a PDP context, the GGSN sends Radius Accounting Message to the Proxy. The RADIUS Account Message includes UE IP-address, MSISDN and optionally the IMSI number. In response, the Proxy sends a rate control initialization message towards the UE's IP address and a specific RC Port number over the GTP-U layer. (The data in the RC Init message contains, among other things: the UE's and Proxy's IP addresses and port numbers). The RNC sniffs for (e.g., examines) messages directed towards this specific RC Port number. Once the RNC has sniffed such message, it binds the IP-address with the corresponding RAB identifier by using the GTP Tunnel Identifier. The RNC may then send a rate control feedback message upon channel containing rate changes towards the IP address and port number it sniffed at the PDP context activation.

The following steps may be performed in the procedure 190 illustrated in Fig. 7:
Step 192: The end-user activates a PDP context, which is sent to the GGSN.
Step 194: In response, the GGSN sends Radius Accounting Message to the Proxy. The Radius Account Message includes UE IP-address, MSISDN and optionally the IMSI number.
Step 196: The Proxy sends a Rate Control Init message towards the UE's IP address and a specific RC Port number at the GTP-U level. (The data in the RC Init message contains, among other things: the UE's and Proxy's IP addresses and port numbers). The RNC sniffs for (e.g., examines) messages directed towards this specific RC Port number. Once the RNC has sniffed such message, it binds the IP-address with the corresponding RAB-Id by using the GTP Tunnel identifier.
Step 198: The RNC sends Rate Control feedback message upon the channel containing rate changes towards the IP address and port number.

Fig. 8 illustrates another "sniffing" procedure 200 in which the RNC determines the UE's IP address in a more flexible manner than in the procedure 190 (Fig. 7). In this scenario, the traffic does not go through a specific Proxy. Initially the UE sends an http request to the proxy to initiate a transfer request. A TCP response is returned towards the UE. The TCP response may be carried in one or several TCP packets. (The response could also be carried in a UDP message in case of "streaming over UDP"). The RNC (or alternatively, the BSC) sniffs the packets and determines the source and destination IP addresses and Port numbers of the packets. The RNC can then send a Rate Control Feedback message back to the source IP address and Port number, which where previously discovered. The UE IP address and Port number may then serve as identity and may therefore may also be included in the message.

The following steps may be performed in the procedure 200 illustrated in Fig. 8:
Step 202: The UE sends an http request to the proxy.
Step 204: A TCP response is returned.
Step 206: The RNC "sniffs" the packets for sniffs the packets based on a predetermined criteria and determines the source and destination IP addresses and Port numbers of the packets.
Step 208: The RNC can now send a Rate Control Feedback message back to the IP address and Port number of the sending proxy/application server.

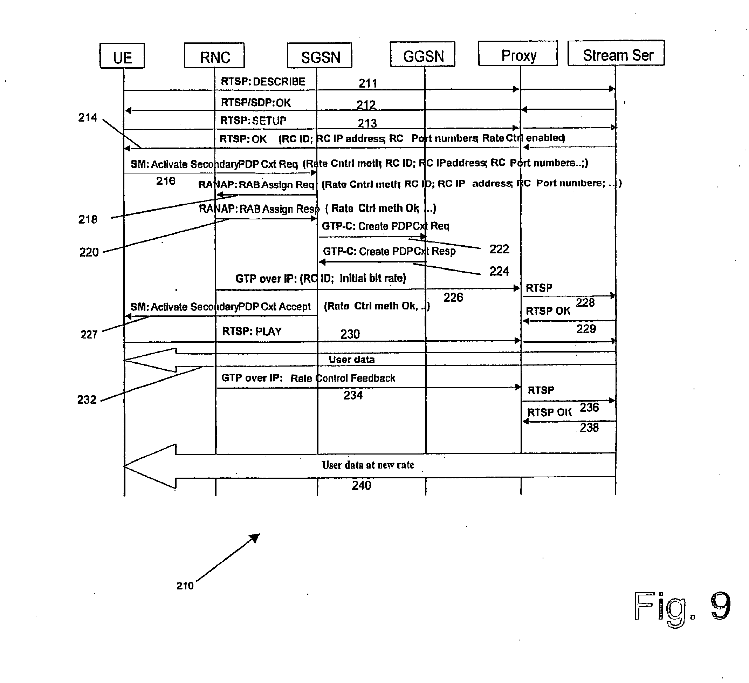

Fig. 9 illustrates an example where the UE configures the RNC with the needed parameters for the rate control service in a PDP context establishment. In this example, the proxy adds the specific rate control parameters to the RTSP/SDP protocol. The RNS may or may not have an IP address of its own. In this example a Proxy and an Application Server will be used to illustrate the principles of the underlying procedure.

In the procedure 210 of Fig. 9, a specific identity (ID) has been added in order to implement the RC Rate Control service. (i.e., the RC ID). In this example, the RC IP address and RC Port number correspond to the Proxy's IP address and Port number. Note that in presence of NATs (Network Address Translators) a special identity for the Rate Control service is used because the UE IP address and Port number are operator specific (i.e., they are only locally known) and cannot be used by the Server as Rate Control service identifier. In alternative embodiments, as in the case of TCP based traffic, the set-up parameters may be included in the HTTP header by the Proxy or the Server. Another alternative, which maybe more suited for general TCP traffic, is to preconfigure the UE with the RC IP address and Port number.

According to this example illustrated in Fig. 9, the following steps may be performed:
Step 211: The UE sends an RTSP describe message to the proxy to initiate the data transmission process. The proxy, in turn, forwards the message to the Application server.
Step 212: The Application server responds by sending an RSTP/SDP OK message back to the UE via the proxy.
Step 213: The UE then sends an RTSP Setup message to the application server via the proxy.
Step 214: In response, the application server sends an RTSP OK message back to the UE. The RTSP OK message contains the RC ID, the RC IP address, RC port numbers, and an indicator that the rate control is enabled (note that the RC IP address and RC port number corresponds to the proxy's IP address and port number, respecfirely).
Step 216: The UE sends a session management message request to the SGSN to activate a secondary PDP context. This SM message contains the Rate control method, the RC ID, the RC IP addresses and the RC Port numbers.
Step 218: In response, the SGSN sends an intermediate layer RANAP message to the RNC. In this example, the message is a RAB assignment request message containing the Rate control method, the RC ID, the RC IP addresses and the RC Port numbers.
Step 220: The RNC sends an acknowledgement in the form of a RANAP RAB Assignment Response indicating that the rate control method is accepted.
Step 222: The SGSN then sends a layer 3 GTP-C Create PDP context request to the GGSN to request the PDP context.
Step 224: In response, the GGSN sends a GTP-C Create PDP Context response message back to the SGSN.
Step 226: The RNC then sends a GTP over IP message to the proxy. The message contains the RC ID and the initial bit rate.
Step 227: In response to step 216, the SGSN sends the UE a SM acceptance message of the Activate Secondary PDP Context request.
Step 228: The Proxy may then send the application server an application level RTSP message, which specifies the initial bit rate for the data transmission.
Step 229: The application server acknowledges the RTSP message and sets the bit rate.
Step 230: The UE sends the application server a request to begin streaming (via the proxy).
Step 232: The application server responds by sending the stream at the previously determined rate (determined in step 226 above).
Step 234: At some point during the transmission, the RNC determines that a new bit rate is possible and sends a layer 3 GTP over IP message (Rate Control Feedback) to the Proxy.
Step 236: The Proxy then sends the application server an application level RTSP message, which specifies a new bit rate.
Step 238: The application server acknowledges the RTSP message and begins sending at a new rate, step 240.

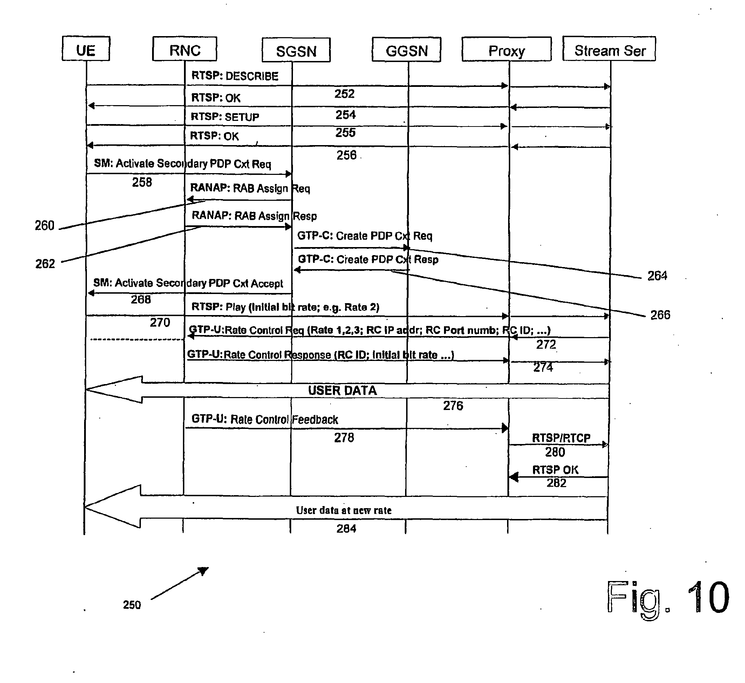

As in the previous example discussed in reference to Fig. 9, Fig. 10 illustrates a procedure 250 where the proxy configures the RNC with the required parameters for the rate control service upon PDP context establishment. In this example, a Proxy and an Application Server will be used to illustrate the underlying procedure.

The initial conditions for the example illustrated in Fig. 10 are these: the RNC is not associated with an IP address and the UE is unaware of the RC service. Furthermore, the RNC and the Proxy may be pre-configured by means of the configuration tool 140 with RC port number. This RC port number is not used by the Proxy as a source port number for the RC messages. The RNC uses the RC port number to "sniff' or single out RC messages, i.e. the messages that have source port number equal to the RC port number.

After the request is initiated (which in this example, occurs at the application level with the RTSP protocol), the UE establishes the secondary PDP context TFT packet filters in such a way that it includes only the user data flow (because the UE is unaware of the RC service [see 3GPP TS 23.060]).

In order to initialize the RNC, the proxy sends an initialization message whose IP/UDP header contains the UE IP address and user data port number as destination address and port. The source port is the RC port number (pre-configured) and source IP address is the Proxy's IP address. Thus, the initialization message contains the following parameters:
· RC IP address (Proxy IP address)
· RC port number (Port at which Proxy will listen to RC messages)
· RC ID.

In response, the GGSN maps the incoming initialization message to the PDP context carrying the user data flow (i.e. the PDP context carrying the data to be controlled) because the IP address and destination port number of the RC message equal the values in the user data.

As described above, the RNC "sniffs" all the incoming traffic of that particular user and intercepts the packets that have the RC port listed as the source port (i.e., the rate control messages). The RNC is able to bind the RC message with correct Radio Access Bearer (RAB) because the RC message has arrived from that particular RAB.

In the uplink, RNC sends the RC Response message to the RC IP address and RC port number (i.e. to the Proxy). This message contains initial bit rate and RC ID. The Proxy uses the RC ID for binding the rate control message to the RTSP session.

According to the procedure 250 illustrated in Fig. 10, the following steps may be performed:
Step 252: The UE sends a RTSP describe message to the application server to the proxy to begin the streaming process. The proxy forwards the message to the Application server.
Step 254: The Application server responds by sending an RSTP/SDP OK message back to the UE via the proxy.
Step 255: The UE then sends an RTSP Setup message to the application server via the proxy.
Step 256: In response, the application server sends an RTSP OK message back to the UE. The proxy adds the RC ID, the RC IP address, RC port numbers, and an indicator that the rate control is enabled to the RTSP OK message. The RC IP address and the RC port number correspond to the proxy's IP address and IP port number.
Step 258: The UE sends a SM message request to the SGSN to activate a secondary PDP context. This SM message contains the Rate control method, the RC ID, the RC IP addresses and the RC Port numbers.
Step 260: In response, the SGSN sends a RANAP message to the RNC. In this example, the message is a RAB assignment request message containing the Rate control method, the RC ID, the RC IP addresses and the RC Port numbers.
Step 262: The RNC sends an acknowledgement in the form of a RANAP RAB Assignment Response indicating that the rate control method is accepted.
Step 264: The SGSN then sends a GTP-C Create PDP context request to the GGSN.
Step 266: In response, the GGSN sends a GTP-C Create PDP Context response message back to the SGSN.
Step 268: In response to step 258, the SGSN sends the UE a SM acceptance message for Activate Secondary PDP Content request.
Step 270: In response, the UE sends an RTSP play message to the application server via the proxy. The play message includes the initial bit rate.
Step 272: In response, the application server sends the UE a rate control request via the proxy. This message is intercepted by the RNC. The rate control request is transmitted at the GTP-U level (or the lu UP level) and contains the rate, the RC IP address, the RC port number and the RC ID). (lu UP is a protocol specifying transmission between the RNC and the CN (through its SGSN). GTP-U typically is layered on top of the lu UP.)
Step 274: In response, the RNC sends a rate control response message back to the application server via the proxy to set the initial bit rate. The rate control response message includes the RC ID and the initial bit rate. In this example, the application server receives this message as an RTSP message.
Step 276: The application server sends the data at the initial bit rate.
Step 278: At some point during the transmission, the RNC determines that a new bit rate is possible and sends a GTP-U message (Rate Control Feedback) to the Proxy.
Step 280: The Proxy then sends the application server an application level RTSP/RTCP message, which specifies a new bit rate.
Step 282: The application server acknowledges the RTSP message and begins sending at a new rate, step 284.

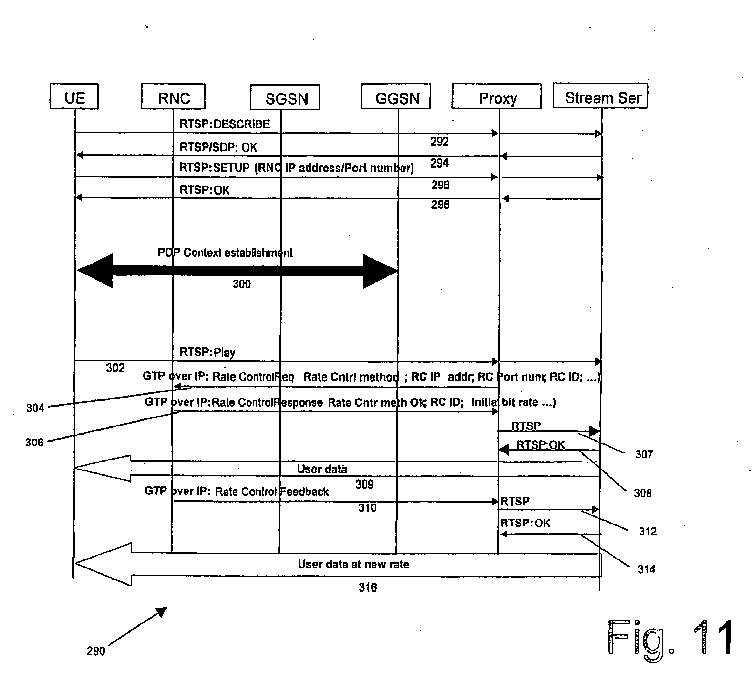

Fig. 11 Illustrates another procedure 290 where the proxy sets up the RNC with parameters for rate control service. As opposed to the example discussed in reference to Fig. 10, in the example illustrated in Fig. 11, the RNC has an IP address.

The initial conditions for the procedure 290 are these: The proxy may retrieve the RNC/BSC IP address from the UE upon the initial request at the RTSP/HTTP Session establishment phase. Thereafter, the UE continuously is updated with regard to the RNCBSC's IP Address/Port number, for which it has established a PDP context Additionally, in case of inter-RNC/BSC handover, the mobility management procedures ensure that the "new" RNC/BSC gets updated so that the RC service continues without any interruption. After initial RTSP signalling exchange and finalizing of the PDP context establishment procedure, the Proxy signals specific RC parameters (RC ID, RC IP address (of the proxy), RC port number, UE IP address and UE data destination port number) to the RNC. The RNC binds the RC ID with the RAB for the session to know where to send the RC messages. In order to achieve this procedure, the RNC "sniffs" for every RAB the user data flow thereby extracting the UE IP address and UE data destination port number. This information may be used to bind the RC ID with the proper RAB.

Thus, according to this example illustrated in Fig. 11, the following steps may be performed:
Step 292: The UE sends an RTSP describe message to initiate the transmission request. The proxy forwards the message to the Application server.
Step 294: The application server responds by sending an RSTP/SDP OK message back to the UE via the proxy.
Step 296: The UE then sends an RTSP Setup message to the application server via the proxy.
Step 298: In response, the application server sends an RTSP OK message back to the UE where the RTSP OK message contains the RC ID, the RC IP address, RC port numbers, and an indicator that the rate control is enabled. These numbers are from the application server or proxy.
Step 300: A PDP context is established.
Step 302: The UE sends an RTSP play message to the application server via the proxy.
Step 304: In response, the proxy sends the RNC a rate control request. The rate control request is transmitted at the GTP over IP layer and includes the rate control method, the RC IP address, the RC port number and the RC ID).
Step 306: The RNC sends a rate control response message back to the proxy over the GTP over IP layer. The rate control response message includes the rate control method, the RC ID and the initial bit rate.
Step 307: The Proxy then sends the application server a RTSP message, which specifies the initial bit rate.
Step 308: The application server acknowledges the RTSP message.
Step 309: The application server sends the data at the initial bit rate via an RTSP message.
Step 310: At some point during the transmission, the RNC determines that a new bit rate is possible and sends a GTP over IP message (Rate Control Feedback) to the Proxy.
Step 312: The Proxy then sends the application server a RTSP message, which specifies a new bit rate.
Step 314: The application server acknowledges the RTSP message and begins sending at a new rate, step 316.

### Person-to-Person Services:

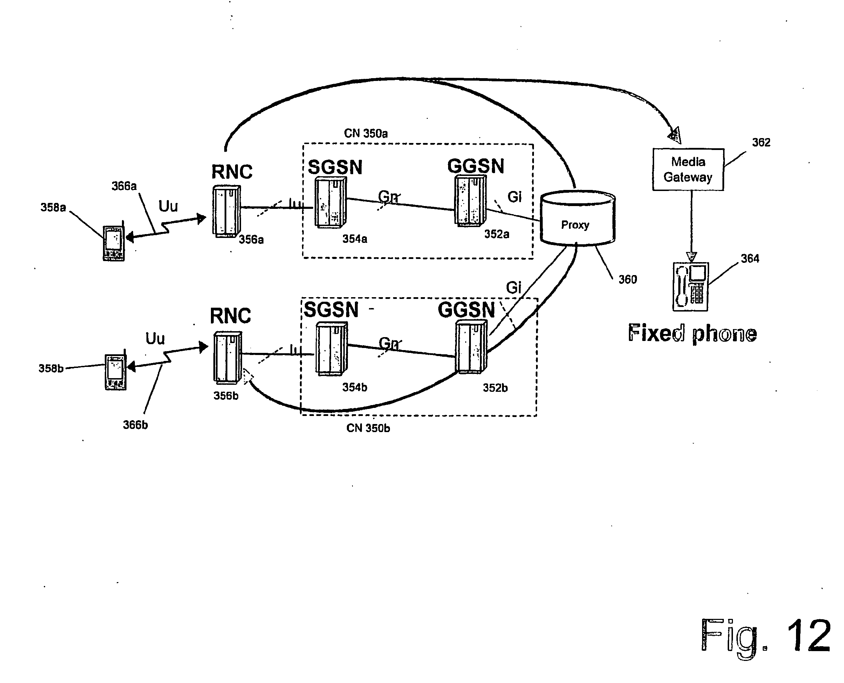

Fig. 12 illustrates an example of a person-to-person (P2P) bit rate adaptation in an UMTS-system in accordance with one aspect of the present invention. The UMTS-system shown in Fig. 12 comprises two core networks, CN 350a, and CN 350b. The core network CN 350a comprises a Gateway GPRS Support Node (GGSN) 352a connected to a Serving GPRS Support Node (SGSN) 354a. The GGSN 352a may be connected to a plurality of SGSNs. The GGSN 352a is a gateway towards external networks such as PSTNs or other mobile networks and the SGSN 354a is connected to at least one Radio Controlling Entity (RCE) (not shown in Fig. 12). Each RCE comprises a Radio Network Controller (RNC) 356a and at least one base station (not shown in Fig. 12) connected to a respective RNC 356a in the UMTS network Each base station provides wireless communication with a mobile terminal UE 358a.

Similarly, the CN 350b has similar components to the CN 350a. Thus, the core network CN 350b comprises a Gateway GPRS Support Node (GGSN) 352b connected to a Serving GPRS Support Node (SGSN) 354b. The GGSN 352b may be connected to a plurality of SGSNs. The SGSN 354b is connected to at least one Radio Controlling Entity (RCE) (not shown in Fig. 12). Each RCE comprises a Radio Network Controller (RNC) 356b and at least one base station (not shown in Fig. 12) connected to the RNC in the UMTS network. Each base station provides wireless communication with a mobile terminals UE 358b.

In this example, at least one of the RCEs comprises a rate controlling means for controlling the bit rate of its radio link Uu. The rate controlling means is preferably a part of a Radio Resource Management (RRM) system. In one embodiment, the rate controlling means includes a negotiating means. The negotiating means is arranged to perform a negotiation of radio link layer bit rates between two rate controlling means.

Thus, in order to perform a negotiation, rate control messages may also be sent between two UEs or between two RNCs through an intermediate node or proxy 360 in a service network 366. Similarly, rate control messages may be sent to an "equivalent" node in a fixed network, such as a Media Gateway 362, which may be in communication with a fixed phone 364.

When an uplink and/or a downlink application layer bit rate over a radio link 366a requires a modification due to changed conditions on said radio link, a first rate controlling means of the radio link transmits modification information to a second rate controlling means of a second radio link 366b. A proposed application layer bit rate modification is then negotiated between the second and the first rate controlling means by the negotiating means. The negotiating means may be arranged to communicate the outcome of the negotiation to at least one of the rate controlling means. Then, the respective mobile terminals UE 358a, UE 358b are requested from the respective rate controlling means to adapt their sending application layer bit rates, and/or receiving application layer bit rates, accordingly. The respective rate controlling means transmits a radio message to their connected terminals by using a radio communication protocol, e.g. the Radio Resource Control (RRC) protocol to request the mobile terminals to adapt to the new application layer bit rate. Thus, the radio message is mapped to the application layer in order to perform the negotiated change of the application layer bit rate.

The rate controlling means may reside in a number of entities. For instance, the first rate controlling means may reside in the first RCE, while the second rate controlling means may reside in the same RCE. Alternatively, each RCE could have its own rate controlling means, or the controlling means could be within another network, such as a fixed network. If the first and second rate controlling means are located within the same RCE, the communication and negotiation between the two rate controlling means are fast and straightforward. If the first and second rate controlling means communicate via intermediate nodes and/or gateways, such as GPRS support nodes, then the RNC sends rate control messages to other nodes within the system.

For instance, in accordance with one aspect of the present invention, the first RNC 356a might use an IP address of a second mobile terminal UE 358b to send a rate control message to the second RNC 356b. This IP address may be used by intermediate nodes, e.g. the GGSN 352a to route the message to the second RNC 356b, which will interpret, and act upon it.

However, the RNC does not initially know the IP address of the second mobile terminal. Thus, the RNC may be configured or "set up" to send RC messages to another RNC, the proxy or another node such as the media gateway.362. The following discussion provides examples illustrating set up procedures for an RNC in various situations.

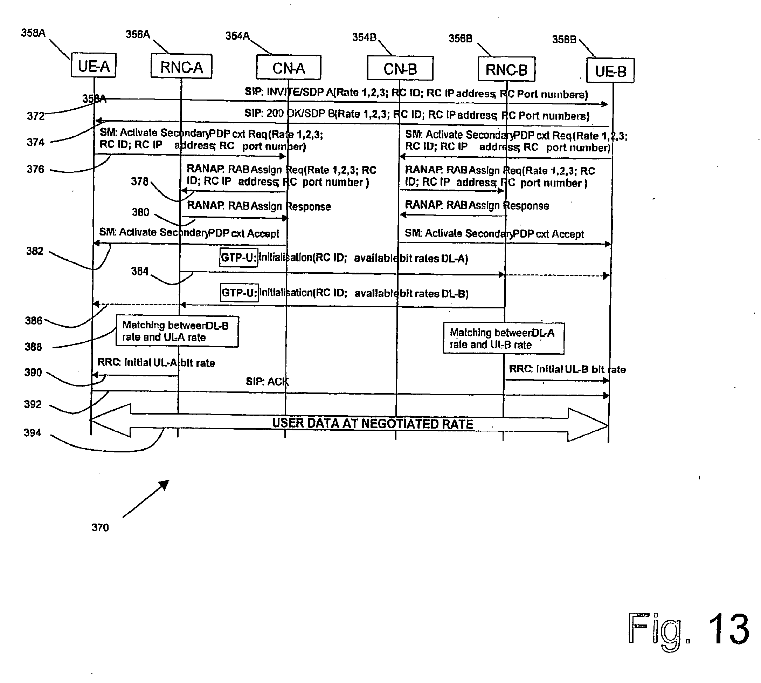

Fig. 13 illustrates an example where the UE configures the RNC with the needed parameters for the rate control service. In this example, the RNCs have no IP addresses of their own. The UE 358a starts by sending a SIP INVITE message to UE 358b. This message contains an SDP file, which describes the UE 358a characteristics. For instance, the file includes RC parameters (ID, IP address and Port number) and an attribute indicating that UE 358A supports RC service. This attribute may be utilized by UE 358B in order to indicate to ROC-8 that UE 358A is attached to the RAN supporting the rate control service. UE 358B replies with a message containing its session description with the same information.

Once UE 358A and UE 358B know each other's session characteristics they start the PDP context activation procedure. The UE 358A PDP context request message contains the RC parameters of UE 358B. This information is forwarded to the RNC 356A by the SGSN 354A by means of RANAP RAB Assignment Request message. The UE defines or "sets up" the TFT packet filters of secondary PDP context in such a way that it includes RC messages (e.g., the incoming RC messages will be mapped onto this secondary PDP context). TFT is used by the GGSN to map the incoming packets onto the right PDP context. TFT consists of one or several packet filters each containing, among other information: source address, destination port range, and a source port range. TFT is created by the UE and delivered to the GGSN in the ^Activate PDP Context Request" message.

During the initial signalling, e.g. SIP, the UE collects the information about the session data flow such as IP addresses and port numbers, and in particular among others RC parameters. It enables the UE to define the TFT that will be used by the GGSN to map the incoming data and rate control packets onto this particular PDP context In this manner the incoming RC messages may be mapped onto the PDP context which carries data to control and the RNC will be able to intercept the message and to bind it with the RAB to be controlled.

When RNC 356A receives the RANAP message, containing the RC parameters, it understands that the available transfer bit rates must be communicated to a remote entity. The RNC 356A uses the RC IP address (IP address of UE 358B) to route the GTP-U or lu UP Initialization message towards UE 358B. The message contains the DL bit rates available over air interface A. The RNC-B uses "sniffing" technique to intercept the message as all traffic to UE 338B will pass through RNGB. As explained previously, "sniffing" means that the RNGB listens to the user data traffic from UE 358A to UE 358B and intercepts messages that are marked, e.g., an RC ID field in the GTP-U protocol or destination port number in IP header, to facilitate the RC service. Such sniffing techniques are discussed above in reference to Figs. 7 and 8. The RNC-B is able to bind the RC message with correct RAB because the RC message has arrived from that particular RAB.

Thus, according to this examples illustrated in Fig. 13, the following procedure 370 may be performed:
Step 372: The UE 358A sends a SIP invite message to initiate a data transfer process between the UE 358A and UE 358B. The message contains a SDP file, which includes the rate, the RC ID, the RC IP address, and RC port numbers.
Step 374: The UE 3588 responds with a SIP OK message. The acknowledgement message also contains an SDP file, which includes the rate, the RC ID, the RC IP address, and RC port numbers for the UE 358B.
Step 376: The UE 358A sends a SM Activate Secondary PDP context Request to the CN 350A. Similarly, the UE 358B sends a SM Activate Secondary PDP context Request to the CN-B.
Step 378: The CN 350A sends a RANAP RAB Assignment Request message to the RNC 356A containing the Rate, RC ID, RC IP address, and RC port number of the UE 358B. Similarly, the CN 350B sends a RANAP RAB Assignment Request message to the RNC 356B containing the Rate, RC ID, RC IP address, and RC port number of the UE 358A.
Step 380: The RNC 356A sends a RANAP RAB Assign Response message to the CN 350A. Similarly, the RNC 356B sends a RANAP RAB Assign Response message to the CN 350B.
Step 382: The CN 350A acknowledges the SM Activate Secondary PDP context request by sending a SM Activate Secondary PDP context Accept message to the RNC 356A. Similarly, the CN 350B acknowledges the SM Activate Secondary PDP context request by sending a SM Activate Secondary PDP context Accept message to the RNC 356B.
Step 384: The RNC 356A sends an lu UP Initialization message towards the UE 358B. The initialization message includes the available bit transfer rates for UE 358A The RNC 356A uses the RC IP address (IP address of the UE 358B) to route to the UE 358B.
Step 386: The RNC 356B intercepts the GTP-U Initialization message and returns a GTP-U Initialization message towards the UE 358A, which is intercepted by the RNC 356A. The initialization message includes the available bit transfer rates for the UE 358A.
Step 388: The RNC 356A determines the optimal bit transfer rate by comparing the bit transfer rate for UE 358B with the bit transfer rate for UE 358B. Similarly, the RNC 356B determines the optimal bit transfer rate by comparing the bit transfer rate for UE 3588 with the bit transfer rate for UE 358A.
Step 390: The RNC 356A sends an RRC message to the UE 358A specifying an initial bit rate. Similarly, the RNC 356B sends an RRC message to the UE 358B specifying an initial bit rate.
Step 392: The UE 358B sends a SIP acknowledgment message to the UE 358B, and the data transfer takes place at the negotiated rate, step 394.

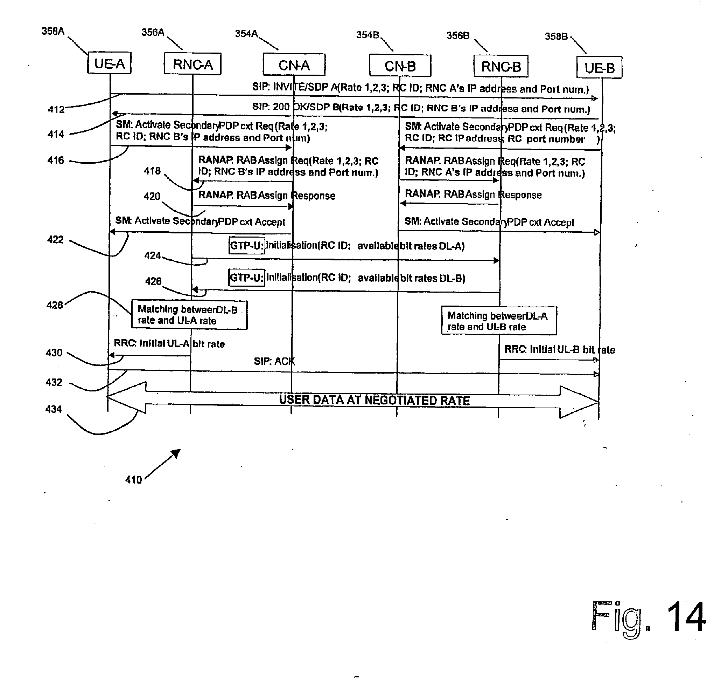

Fig. 14 illustrates an example where one of the UEs configures the appropriate RNC with the needed parameters for the rate control service. In this example, the RNCs have their own IP addresses/port numbers. Furthermore, the UEs are updated continuously with regard to the RNC/BSC's IP Address/Port number, four which they establish a PDP context.

The procedure 410 of Fig. 14 is similar to procedure 370 of Fig. 13 in that the RC ID is used to bind the application session with the RAB. In this example, however, the RC IP address and RC Port number correspond to the respective RNC's IP address and Port number.

The RNCs are "set-up" with the RC ID, the IP address, and Port number of the corresponding RNCs. Thereafter, the RNC 356a may indicate to RNC 356b that it has either a shortage or spare radio resources by sending a Rate Control (RC) message to RNC 356B or *vice versa*. The message contains RC ID and bit rate value. The RNC 356B binds the RC message with a proper RAB basing on RC ID. The same mechanism may also be used in the reverse direction (i.e. from the RNC 356b to the RNC 356a).

If UE 358A moves to another controlling RNC, the mobility management procedures update any new and corresponding RNCs with necessary data (e.g. new/updated RNC IP addresses/Port numbers) to continue the Rate Control service without any interruption.

Thus, according to this example illustrated in Fig. 14, the following procedure 410 may be performed:
Step 412: The UE 358A sends a SIP invite message to initiate the data transfer. The message contains a SDP file, which includes the rate, the RC ID, the RNC 356A's IP address, and RNC 356A's port number.
Step 414: The UE 358B responds with a SIP OK message. The message also contains an SDP file, which includes the rate, the RC ID, the RRC 356B's IP address, and the RNC 356B's port number.
Step 416: The UE 358A sends a SM Activate Secondary PDP context Request to the CN 350A. The request contains the rate, the RC ID, RNC 356B's IP address and RNC 356B's port number. Similarly, the UE 358B sends a SM Activate Secondary PDP context Request to the CN 350B containing the rate, the RC ID, RNC 356A's IP address and RNC 356A's port number.
Step 418: The CN 350A sends a RANAP RAB Assignment Request message to the RNC 356A containing the Rate, RC ID, RNC 356B's IP address, and RNC 356B's port number. Similarly, the CN 350B sends a RANAP RAB Assignment Request message to the RNC 356B containing the Rate, RC ID, RNC 356A's IP address, and RNC 356A's port number.
Step 420: The RNC 356A sends a RANAP RAB Assign Response message to the CN 350A. Similarly, the RNC 356B sends a RANAP RAB Assign Response message to the CN 350B.
Step 422: The CN 350A acknowledges the SM Activate Secondary PDP context request by sending a SM Activate Secondary PDP context Accept message to the CN 350A. The CN 350A acknowledges the SM Activate Secondary PDP context request by sending a SM Activate Secondary PDP context Accept message to the CN 350A.
Step 424: The RNC 356A sends a GTP-U Initialization message to the RNC 356B including the available rates for UE 358A.
Step 426: In response, the RNC 356B sends a GTP-U Initialization message to the RNC 356A, the initialization message includes the available bit transfer rates for the UE 358A.
Step 428: The RNC 356A determines the optimal bit transfer rate by comparing the bit transfer rate for UE 3588 with the bit transfer rate for UE 358B. Similarly, the RNC 356B determines the optimal bit transfer rate by comparing the bit transfer rate for UE 358B with the bit transfer rate for UE 358A.
Step 430: The RNC 356A sends an RRC message to the UE 358A specifying an initial bit rate. Similarly, the RNC 356B sends an RRC message to the UE 358B specifying an initial bit rate.
Step 432: The UE 358B sends a SIP acknowledgment message to the UE 358B, and the data transfer takes place at the negotiated rate, step 434.

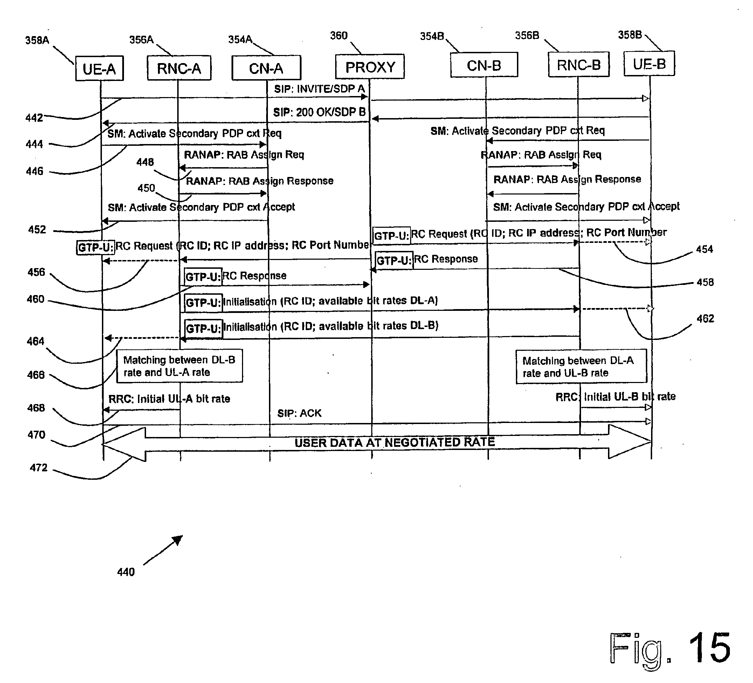

Fig. 15 illustrates an example where the proxy sets up the RNC or BSC. In this example, the RNC is not associated with any IP address and UE is unaware of the RC service. Furthermore, the RNC and the proxy are pre-configured by means of configuration tool with RC port number. This RC port number is used by the proxy as source port number for the RC messages. The RNC uses the RC port number to single out RC messages, in other words, the messages that have source port number equal to the RC port number. In this scenario the proxy initializes the RNCs.

UE 358A initiates the application session by sending an INVITE message to UE 358B, via the SIP-Proxy. The message includes a SDP file, which specifies the rates that are applicable for the session.

After the initial SIP signalling, the UEs establish the secondary PDP contexts TFT packet filters in such a way that they include the user data flow, as the UEs are unaware of the RC service [see 3GPP TS 23.060].

Because the proxy is a SIP proxy it intercepts the SIP messages and thereby can read and store all the information about the UEs and session. Afterwards the proxy initialises the RNCs. In order to perform the initialization, the Proxy 360 sends an Initialization message to UE 358A and UE 358B IP destination addresses and user data port numbers as destination port, the source port is the RC port number (pre-configured) and source IP address is Proxy IP address. The message contains following parameters:
RC IP address (peer UE IP address)
RC source port number (Proxy could choose port at which peer RNC will listen to RC messages)
RC ID.

The GGSN maps the incoming initialisation message to the PDP context carrying the user data flow (i.e. the PDP context carrying the data to be controlled) since the IP address and destination port number of the RC message equals the ones of the user data.

The RNCs "sniff" all the incoming traffic of that particular user and intercept the packets that have the RC port as source port, i.e. RC messages. RNCs are able to bind the RC message with correct RAB because the RC message has arrived from that particular RAB.

In the UL layer, RNC 356A sends the RC Initialisation message to the RC IP address and RC port number (i.e. to the UE 358B). The message contains initial bit rate and RC ID.

GGSN-B maps the incoming initialisation message to the correct PDP context since the IP address and destination port number of RC message equals the user data flow.

RNC 356B, upon "sniffing" all the incoming traffic of that particular user, intercepts the packets that have the RC port as source port, i.e. RC messages. RNC is able to bind the RC message with correct RAB because the RC message has arrived from that particular RAB.

RNC 356B then replies to the Initialisation RC message in a similar manner to previous examples discussed above.

Thus, according to this example illustrated in Fig. 15, the following procedure 440 may be performed:
Step 442: The UE 358A sends a SIP invite message to the proxy 360 containing an SDP file, which includes the transfer rates applicable for the session. The proxy 360 forwards the SIP message onto the UE 358B.
Step 444: In response, the UE 358B sends a SIP OK message to the proxy 360. The acknowledgement message also contains an SDP file, which includes the applicable transfer rate for the UE 358B.
Step 446: The UE 358A sends a SM Activate Secondary PDP context Request to the CN 350A. The request contains the transfer rate. Similarly, the UE 358B sends a SM Activate Secondary PDP context Request to the CN 350B also containing the user transfer rate.
Step 448: The CN 350A sends a RANAP RAB Assignment Request message to the RNC 356A containing the Rate, RC ID, RNC 356B's IP address, and RNC 356B's port number. Similarly, the CN 350B sends a RANAP RAB Assignment Request message to the RNC 356B containing the Rate, RC ID, RNC 356A's IP address, and RNC 356A's port number.
Step 450: The RNC 356A sends a RANAP RAB Assign Response message to the CN. 350A. Similarly, the RNC 356B sends a RANAP RAB Assign Response message to the CN 350B.
Step 452: The CN 350A acknowledges the SM Activate Secondary PDP context request by sending a SM Activate Secondary PDP context Accept message to the CN 350A. The CN 350B acknowledges the SM Activate Secondary PDP context request by sending a SM Activate Secondary PDP context Accept message to the UE 358B.
Step 454: The proxy 360 sends a GTP-U RC Request towards the UE 358B. The RC Request includes the RC ID, the RC IP address, and the RC Port Number. The RNC 356B intercepts this message.
Step 456: The proxy. 360 sends and GTP-U RC Request towards the UE 358A. The RC Request includes the RC ID, the RC IP address, and the RC Port Number. The RNC 356A intercepts this message.
Step 458: The RNC 356B returns a GTP-U response to the RC Request.
Step 460: The RNC 356A returns a GTP-U response to the RC Request.
Step 462: Now that the RNC 356A knows the IP address of the UE 358b, the RNC 356A sends a GTP-U initialization message towards the UE 358B. The message is intercepted by the RNC 356B. The message contains the RC ID and the available transfer rates for the UE 358A.
Step 464: In response, the RNC 356B sends a GTP-U Initialization message towards the UE 358A, which is intercepted by the RNC 356A, the initialization message includes the available bit transfer rates for the UE 3588.
Step 466: Now that the RNC 356A has the available bit transfer rate for UE 358B, it can determine the optimal bit transfer rate by comparing the available bit transfer rate for UE 358B with the available bit transfer rate for UE 358B. Similarly, the RNC 356B determines the optimal bit transfer rate by comparing the available bit transfer rate for UE 358B with the available bit transfer rate for UE 358A.
Step 468: The RNC 356A sends an RRC message to the UE 358A specifying an initial bit rate. Similarly, the RNC 3568 sends an RRC message to the UE 358B specifying an initial bit rate.
Step 470: The UE 358B sends a SIP acknowledgment message to the UE 358B, and the data transfer takes place at the negotiated rate, step 472.

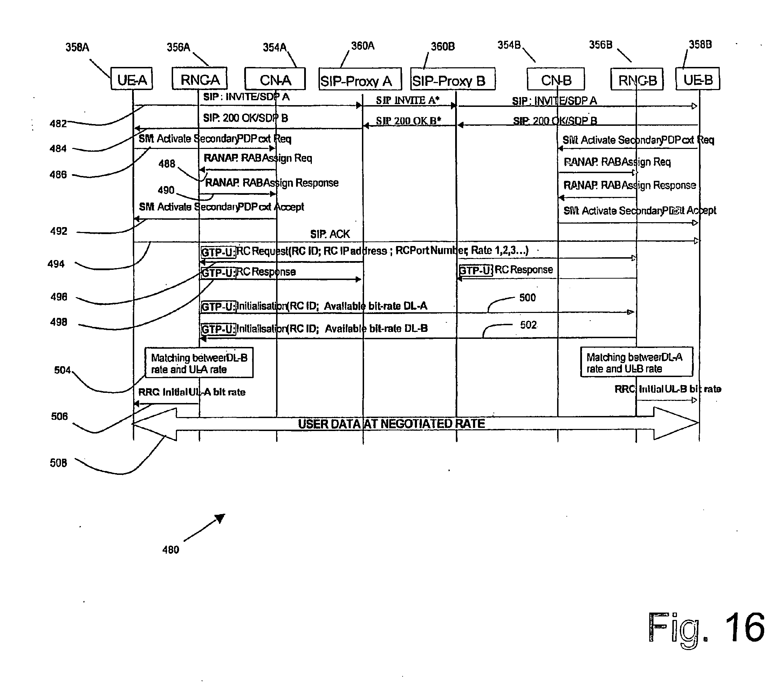

Fig. 16 illustrates a procedure 480 where a proxy sets up the RNC or BSC. The procedure 480 is similar to the procedure 440 discussed in reference to Fig. 15. In this example, the RNCs have IP addresses and the local SIP proxy has knowledge of the addresses. Thus, the Proxy continuously gets updated with regard to the RNC/BSC's IP Address/Port number, for which UEs have established a PDP context. The RNC address could alternatively be received from the UE.

The UE 358A initiates the application session by sending an INVITE message to UE 358B, via SIP-Proxies (one or several such proxies). The first SIP-Proxy adds the RNC-IP address and Port number to the SIP message. The SDP file specifies the rates that are applicable for the session. Alternatively, if it is the UE that knows of the RNC IP address, then the UE may add this information to the SIP message.

Once UE 358A and UE 3588 know each other's application session characteristics, they start the PDP context activation procedure. Thereafter, UE 358A sends a SIP acknowledgement to UE 358B, via the SIP-Proxies. The SIP-Proxies intercept this message and issue the Rate Control service by sending RC Request messages to its local RNC. These messages contain specific RC parameters (RC ID, RC IP address, RC port number, UE IP address and UE data destination port number). The appropriate RNC binds the RC ID with the RAB so that the session will know where to send the Rate Control messages. In order to perform this procedure, the RNC "sniffs" for every RAB in the user data flow thereby extracting the UE IP address and UE data destination port number. This information is used to bind the RC ID with the proper RAB.

Thus, according to this example illustrated in Fig. 16, the following procedure 480 may be performed:
Step 482: The UE 358A sends a SIP invite message to the proxy 360A containing an SDP file, which includes the transfer rates applicable for the session. The SIP-Proxy adds to the SDP file the RNC-IP address and Port number to which the UE 358A. The proxy 360A forwards the SIP message onto other SIP proxies until the message reaches the UE 358B.
Step 484: The UE 358B responds by sending a SIP OK message to the proxy 360B. The acknowledgement message also contains an PDP file, which includes the applicable transfer rate for the UE 358B.
Step 486: The UE 358A sends a SM Activate Secondary PDP context Request to the CN 350A. The request contains the user data flow. Similarly, the UE 358B sends a SM Activate Secondary PDP context Request to the CN 350B also containing the user data flow.
Step 488: The CN 350A sends a RANAP RAB Assignment Request message to the RNC 356A containing the Rate, RC ID, RNC 356B's IP address, and RNC 356B's port number. Similarly, the CN 350B sends a RANAP RAB Assignment Request message to the RNC 356B containing the Rate, RC ID, RNC 356A's IP address, and RNC 356A's port number.
Step 490: The RNC 356A sends a RANAP RAB Assign Response message to the CN 350A. Similarly, the RNC 356B sends a RANAP RAB Assign Response message to the CN 350B.
Step 492: The CN 350A acknowledges the SM Activate Secondary PDP context request by sending a SM Activate Secondary PDP context Accept message to the CN 350A. The CN 350B acknowledges the SIN Activate Secondary PDP context request by sending a SM Activate Secondary PDP context Accept message to the CN 350B.
Step 494: The UE 358A sends a SIP acknowledgment message back to the UE 358B.
Step 496: The proxy sends a GTP-U RC Request to RNC 356B. The RC Request includes the RC ID, the RC IP address, and the RC Port Number. Similarly, the proxy sends a GTP-U RC Request to RNC 356A. The RC Request includes the RC ID, the RC IP address, and the RC Port Number.
Step 498: The RNC 356B returns a GTP-U response to the RC Request and the RNC 356A returns a GTP-U response to the RC Request.
Step 500: The RNC 356A sends a GTP-U initialization message to the RNC 356B. The message contains the RC ID, and the available transfer rates for the UE 358A.
Step 502: In response, the RNC 356B sends a GTP-U initialization message to the RNC 356A, the Initialization message includes the available bit transfer rates for the UE 358B.
Step 504: The RNC 356A determines the optimal bit transfer rate by comparing the bit transfer rate for UE 358B with the bit transfer rate for UE 358B and selecting the lowest bit transfer rate. Similarly, the RNC 356B determines the optimal bit transfer rate by comparing the bit transfer rate for UE 358B with the bit transfer rate for UE 358A.
Step 506: The RNC 356A sends an RRC message to the UE 358A specifying an initial bit rate. Similarly, the RNC 356B sends an RRC message to the UE 358B specifying an initial bit rate.
Step 508: The data transfer takes place at the negotiated rate.

As indicated in Fig. 12, some embodiments of the present invention may communicate with a media gateway. The media gateway may also set up the RNC/BSC for RC service, which can be used, for instance, in mobile-to-fixed phone communication. This P2P situation may be similar to a P2C case where the Proxy is replaced by the Media Gateway (MGW). The MGW performs transcoding functionality between PLMN and PSTN. Thus the RC service may be used to properly set the transcoder's bit rate.

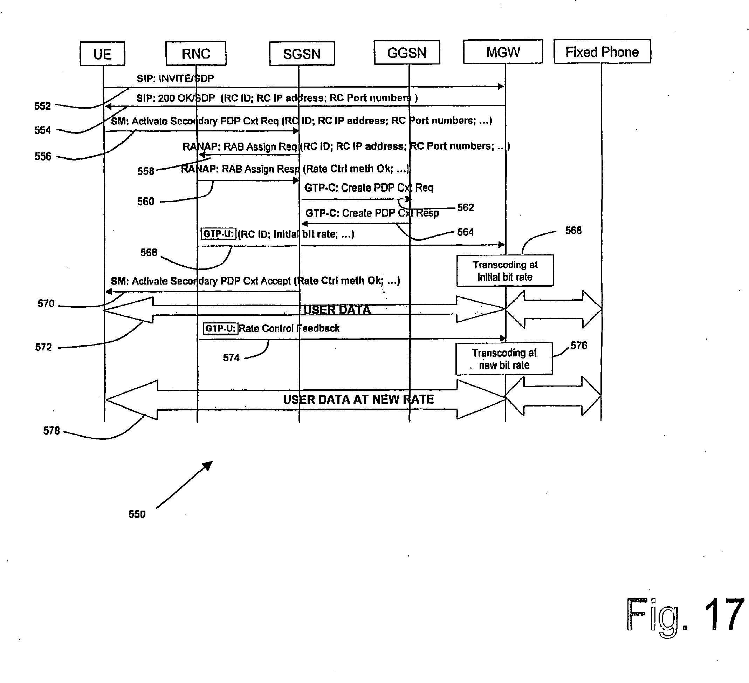

Fig. 17 is such an example where the UE sets up the RNC (or alternatively, the BSC) with the necessary parameters for Rate Control service upon PDP context establishment. In this example, the MGW adds the specific RC parameters to the SIP/SDP protocol. The RRC may or may not have an IP address of its own.

In this example 550, a specific identity (ID) has been added in order to implement the RC Rate Control service. (i.e., the RC ID). Furthermore, the RC IP address and RC Port number correspond to the MGWs IP address and Port number. Thus, the RC set-up in this example is conceptually similar to the procedure 210 described in reference to Fig. 9. In this example, however, SIP protocol is used to set up the session rather than RTSP. The RC parameters, therefore, are sent to the UE in the SIP OK message.

According to this example illustrated in Fig. 17, the following steps may be performed:
Step 552: The UE sends a SIP INVITE message to the MGW.
Step 554: The MGW responds by sending a SIP: 200 OK/SDP message back to the UE. The message also contains an SDP file, which includes the RC ID, the RC IP address, and the RC port numbers.
Step 556 The UE sends a SM message request to an SGSN to activate a secondary PDP context. This SM message contains the RC ID, the RC IP addresses and the RC Port numbers.
Step 558: In response, the SGSN sends a RANAP message to the RNC. In this example, the message is a RAB assignment request message containing the RC ID, the RC IP addresses and the RC Port numbers.
Step 560: The RNC sends an acknowledgment in the form of a RANAP RAB Assignment Response indicating that the rate control method is accepted.
Step 562: The SGSN then sends a GTP-C Create PDP context request to the GGSN to begin the PDP context.
Step 564: In response, the GGSN sends a GTP-C Create PDP Context response message back to the SGSN.
Step 566: The RNC then sends an GTP-U to the MGW. The message includes the RC ID and the initial bit rate.
Step 568: The MGW sets the transcoder's rate to the initial bit rate.
Step 570: In response to step 556, the SGSN sends the UE a SM acceptance message for Activate Secondary PDP Context request.
Step 572: Data is sent at the transcoder rate between the UE and the fixed phone.
Step 574: At some point during the transmission, the RNC determines that a new bit rate is possible and sends a GTP-U message (Rate Control Feedback) to the MGW.
Step 576: The MGW adjusts the transcoder's rate to the new rate.
Step 578: Data is sent at the new transcoder rate.

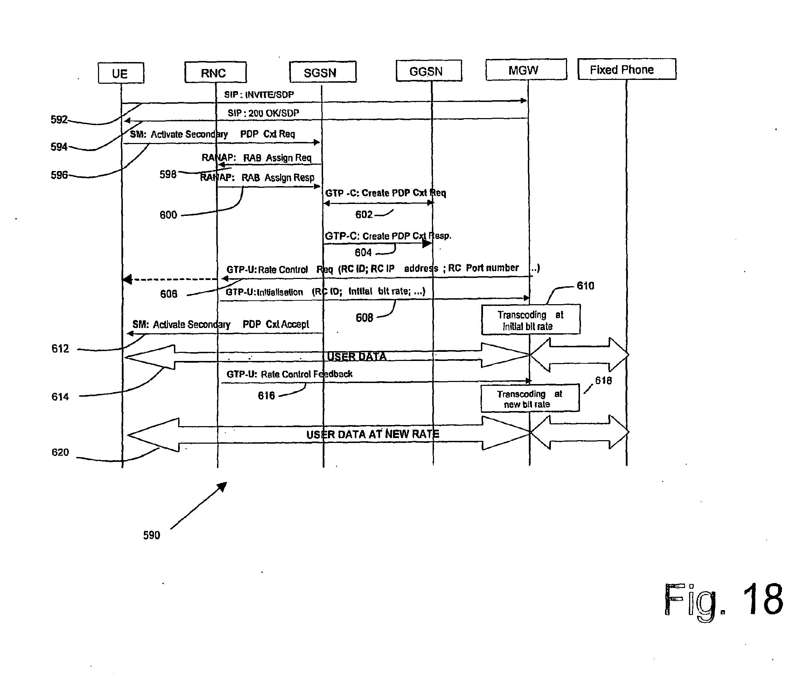

Fig. 18 is an example where the MGW sets up the RNC or the BSC with the required parameters for the rate control service upon PDP context establishment. In this example, the RNC is not associated with an IP address and the UE is unaware of the RC service. Furthermore, the RNC and the MGW may be pre-configured by means of a configuration tool with RC port number. This RC port number is used by the MGW as a source port number for all RC messages. The RNC uses the RC port number to single out RC messages, i.e. the messages that have source port number equal to the RC port number.

After SIP initial signalling, the UE establishes the secondary PDP context where TFT packet filters in such a way that it includes only the user data flow, as the UE is unaware of the RC service [see 3GPP TS 23.060]. Because the UE is unaware of the RC service, it can only define TFT packet filters of the secondary PDP context for user data packets (in other words, it cannot include RC messages). So the RC messages are mapped onto the same PDP context as the user data. Therefore from the perspective of the GGSN, the RC messages appear to be the user data. This mapping may be achieved assigning to the RC messages the same IP parameters as the data packet, but the source port number is the RC port. In this way the incoming RC message will be mapped by GGSN onto data PDP context. The RC messages then may be intercepted by the RNC which uses the RC source port number as an identifier. As previously discussed, the RNC is preconfigured by means of a configuration tool so it will recognize this type of message.

In order to preconfigure or "initialize" the RNC, the MGW sends an initialization message whose IP/UDP header contains: UE IP address and user data port number as destination address and port, the source port is the RC port number (pre-configured to be the port at which the MGW will listen to the RC messages) and source IP address is the MGW's IP address (i.e., the RC IP address). The message may also contain the RC ID.

In response, the applicable GGSN maps the incoming initialization message to the PDP context carrying the user data flow (i.e. the PDP context carrying the data to be controlled) since the IP address and destination port number of the RC message equal the ones of the user data.

As described above, the RNC "sniffs" all the incoming traffic for that particular user and intercepts the packets that have the RC port as source port, i.e. RC messages. The RNC is able to bind the RC message with correct Radio Access Bearer (RAB) because the RC message has arrived from that particular RAB.
In the uplink, the RNC sends the RC Response message to the RC IP address and RC port number (i.e. to the MGW). The message contains initial bit rate and RC ID.

According to this example illustrated in Fig. 18, the following procedure 590 may be performed:
Step 592: The UE sends a SIP INVITE message to the MGW.
Step 594: The MGW responds by sending a SIP: 200 OK/SDP message back to the UE.
Step 596: The UE sends a SM message request to the SGSN to activate a secondary PDP context
Step 598: In response, the SGSN sends a RANAP message to the RNC.
Step 600: The RNC sends an acknowledgment in the form of a RANAP RAB Assignment Response indicating that the rate control method is accepted.
Step 602: The SGSN then sends a GTP-C Create PDP context request to the GGSN to begin the PDP context.
Step 604: In response, the GGSN sends a GTP-C Create PDP Context response message back to the SGSN.
Step 606: The MGW sends a GTP-U Rate Control Request message towards the UE. In this example, the request message includes the RC ID, the RC IP address (i.e., the MGWs IP address), and the RC port number.
Step 608: The RNC intercepts this rate control request and, in response sends an initialization request to the MGW, where the initialization request contains the RC ID and the initial bit rate.
Step 610: The MGW sets the transcoder's rate to the initial bit rate.
Step 612: The SGSN responds to the UE with an Activate Secondary PDP Context Accept message.
Step 614: Data is sent at the transcoder rate between the UE and the fixed phone.
Step 616: At some point during the transmission, the RNC determines that a new bit rate is possible and sends a GTP-U message (Rate Control Feedback) to the MGW.
Step 618: The MGW adjusts the transcoder's rate to the new rate.
Step 620: Date is sent at the new transcoder rate.

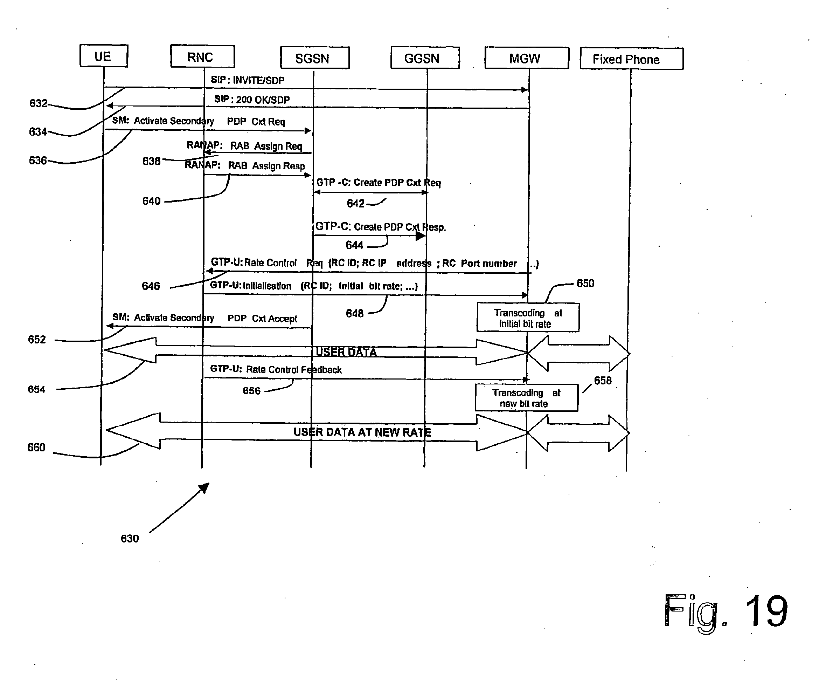

Fig. 19 is an example where the MGW sets up the RNC/BSC with the required parameters for the rate control service upon PDP context establishment. In this example, however, the RNC has an IP address and this address is known to the MGW. The MGW may, for example, retrieve the RNC/BSC IP address from the UE upon RTSP/HTTP session establishment phase, or alternatively, upon a SIP establishment phase. (The UE is continuously updated with regard to the RNC IP Address/Port number, for which it has established a PDP context).

According to the example procedure 630 illustrated in Fig. 19, the following steps may be performed:
Step 632: The UE sends a SIP INVITE message to the MGW.
Step 634: The MGW responds by sending a SIP: 200 OK/SDP message back to the UE.
Step 636: The UE sends a SM message request to the SGSN to activate a secondary PDP context.
Step 638: In response, the SGSN sends a RANAP message to the RNC.
Step 640: The RNC sends an acknowledgment in the form of a RANAP RAB Assignment Response indicating that the rate control method is accepted.
Step 642: The SGSN then sends a GTP-C Create PDP context request to the GGSN to begin the PDP context.
Step 644: In response, the GGSN sends a GTP-C Create PDP Context response message back to the SGSN.
Step 646: The MGW then sends a GTP-U Rate Control Request message to the RNC. In this example, the request message includes the RC ID, the RC IP address, and the RC port number.
Step 648: In response, the RNC sends an initialization request to the MGW, where the initialization request contains the RC ID and the initial bit rate.
Step 650: The MGW sets the transcoder's rate to the initial bit rate.
Step 652: In response to step 636, the SGSN sends the UE a SM acceptance message for Activate Secondary PDP Context request.
Step 654: Data is sent at the transcoder rate between the UE and the fixed phone.
Step 656: At some point during the transmission, the RNC determines that a new bit rate is possible and sends a GTP-U message (Rate Control Feedback) to the MGW.
Step 658: The MGW adjusts the transcoder's rate to the new rate.
Step 660: Data is sent at the new transcoder rate.

In the drawings and specification, there have been disclosed typical preferred embodiments of the invention and, although specific terms are employed, they are used in a generic and descriptive sense only and not for purposes of limitation, the scope of the invention being set forth in the following claims. One skilled in the art would recognize other embodiments which would also incorporate the invention, for instance: Embodiments of the invention could also incorporate a system incorporating a method for controlling the transmission flow rate of data bits in a data bit transfer session from a serving entity to a client, the session involving bit transfer over a wireless communications link, the system comprising: a means for setting up the session by providing a radio control node to establish flow rate parameters relating to the wireless link, wherein the setting up includes: a means for resolving addressing between the radio control node and the serving entity, a means for sending rate control configuration parameters to the radio control node, a means for generating in the radio control node an initial rate control (RC) message including initial flow rate parameters, a means for sending at least one initial rate control message to allow the serving entity to set initial transmission rates for the session in accordance with at least one of the initial flow rate parameters; a means for monitoring the wireless communication link; a means for based on monitoring, sending new flow rate parameters so that the serving entity can update the transmission rate of the session in accordance with the new rate control parameters.

Such a system may further comprise a means for examining, by the radio control node, every message header in the flow between the client and the serving entity to obtain rate control configuration parameters within the examined messages.

The system may also comprise a means for activating an intermediate layer information set between the client and a gateway node; a means for sending, by the gateway node, an application layer message to the serving entity, including the IP address of the client; a means for receiving, by the radio control node, a radio control initiation message from the serving entity, including the IP address of the serving entity to allow the radio control node to send messages to the serving entity; and a means for sending, by the radio control node, a rate control message to the serving entity, wherein the rate control message contains flow rate parameters.

The system may also comprise a means for initiating a session, by the client, by sending an application layer command to the serving entity, a means for sending, by the serving entity, a transport layer command to the client, a means for examining, by the radio control node, headers of transport layer commands from the serving entity to obtain rate control configuration parameters within the transport layer command, a means for sending, by the radio control node, a rate control feed back in response to finding rate control configuration parameters in the transport layer command.

Additionally, the means for setting up further may also comprise: a means for initiating the session according to an application level protocol, a means for receiving, by the radio control node, the rate control configuration parameters according to a first intermediate layer protocol; a means for tying the first intermediate layer control configuration parameters to parameters according to a second intermediate layer protocol; a means for generating the tied parameters; and a means for including the tied parameters in the initial rate control message.

The means for setting up may further comprise: a means for initiating the session according to an application level protocol, a means for receiving, by the radio control node, the rate control configuration parameters according to an intermediate layer protocol; a means for sending the initial rate to the rate control IP address specified in the configuration parameters.

The system may also comprise a means for activating an intermediate layer information set between the client and a serving support node in the network. The serving entity of the system may be an application server, a streaming server or a proxy in communication with an application server. The client may be a mobile station.

In other embodiments, the rate control configuration parameters may be selected from the group consisting of a rate control method indicator, a rate control identifier, a rate control IP address, and rate control port numbers. The flow rate parameters are selected from the group consisting of a rate control identifier and a bit rate. The application layer protocol may be the Real Time Streaming Protocol (RTSP), the first intermediate protocol is Radio Access Network Application Part (RANAP), and the second intermediate protocol is lu UP or GTP over IP. Furthermore, the session may occur within a network which is a Universal Mobile Telephony System (UMTS), a General Packet Radio Service (GPRS) system, or a WLAN network.

In yet other embodiments, there may be a system which having instructions for negotiating the transmission flow rate of data bits in a data bit transfer session from a first mobile entity to a second mobile entity, the session involving bit transmission over at least one wireless communications link, the instructions may comprise: providing a first radio control node in communication with the first mobile entity for controlling the bit transmission rates of a first radio link to the first mobile entity, providing a second radio control node in communication with the second mobile entity, for controlling bit transmission rates of a second radio link to the second mobile entity, resolving addressing between the first radio control node and the second radio control node to allow communication between the first radio control node and the second radio control node, sending rate control parameters for the first link to the second radio control node, sending rate control parameters for the second link to the first radio control node, matching the rate control parameters to obtain an actual bit transmission rate, sending an indicator of the actual bit transmission rate to the first mobile entity and to the second mobile entity so that the bit transmission can occur at the bit transmission rate.

In some embodiments, the resolving may also include: initiating a session by sending set up commands in accordance with an application layer protocol between the first mobile entity and the second mobile entity, establishing an intermediate layer information set between the first mobile entity and a serving node, receiving, by the first radio control node, rate control configuration parameters for the second mobile entity according to a first intermediate layer protocol; and receiving, by the second radio control node, rate control configuration parameters for the first mobile entity according to a first intermediate layer protocol.

In other embodiments, the system may contain instructions for examining, by the first radio control node, the headers of messages addressed to the first mobile entity to obtain the available transmission rates for the second radio link, and examining, by the second radio control node, the headers of message addressed to the second mobile entity to obtain the available transmission rates for the first radio link.

In some embodiments, the system may contain instructions for providing a proxy whereby all messages intended to received by the first mobile entity from the second mobile entity, all messages received by the second mobile entity from the first mobile entity, are sent through and forwarded on by the proxy, or examining, by the first radio control node, the headers of messages addressed to the first mobile entity to obtain rate control configuration parameters relating to the second mobile entity, and examining, by the second radio control node, the headers of message addressed to the second mobile entity to obtain rate control configuration parameters relating to the first mobile entity.

In some embodiments, the system may contain instructions for providing a first proxy whereby all messages sent by the first mobile entity to the second mobile entity, all messages sent by the first radio control node to the second radio control node, are sent to and forwarded on by the first proxy. Additionally, some embodiments may comprise instructions for providing a second proxy whereby all messages sent by the second mobile entity to the first mobile entity, and all messages sent by the second radio control node to the first radio control node are sent to and forwarded on by the second proxy.

In some of these embodiments, the application layer protocol used by the system is a Session initiation Protocol, the first intermediate layer protocol is Radio Access Network Application Part (RANAP), and the second intermediate layer protocol is lu UP.

In yet other embodiments, there may be a system for controlling the transcoding rate of a media gateway during a data bit transfer session from the media gateway to a client, the bit transfer session involving bit transfer over a wireless communications link, the system comprising: a means for setting up the session by providing a radio control node to establish transcoding rate parameters relating to the wireless link, wherein the setting up includes: a means for resolving addressing between the radio control node and the media gateway, a means for sending rate control configuration parameters to the radio control node, a means for generating in the radio control node an initial rate control message including initial transcoding rate parameters, a means for sending at least one initial rate control message so that the media gateway can set initial transcoding rates for the session in accordance with at least one of the initial transcoding rate parameters; a means for monitoring the wireless communication link; a means for based on monitoring, sending new transcoding rate parameters so that the media gateway can update the transmission rate of the session in accordance with the new transcoding rate parameters.

Other embodiments may contain a means for examining, by the radio control node, every message header in the flow between the client and the media gateway to obtain rate control configuration parameters within the examined messages. Yet other embodiments may included a means for activating an intermediate layer information set between the client and a gateway node in the network; a means for sending, by the gateway node, an application layer message to the media gateway, including the IP address of the client; and a means for receiving, by the radio control node, a rate control initiation message, including the IP address of the media gateway to allow the radio control node to send messages to the media gateway.

Other embodiments may included a means for initiating a session, by the client, by sending an application layer command to the media gateway, a means for sending, by the media gateway, a transport layer command to the client wherein the transport layer command includes rate control configuration parameters; and a means for examining, by the radio control node, the headers of transport layer commands to obtain rate control configuration parameters within the transport layer commands.

In some embodiments, the means for setting up further includes a means for initiating the session according to an application level protocol, a means for receiving, by the radio control node, the rate control configuration parameters according to a first intermediate layer protocol; a means for tying the first intermediate layer control configuration parameters to parameters according to a second intermediate layer protocol; a means for generating the tied parameters; and a means for including the tied parameters in the initial rate control message.

In some embodiments, the means for setting up further includes a means for initiating the session according to an application level protocol, a means for receiving, by the radio control node, the rate control configuration parameters according to an intermediate layer protocol; a means for sending the initial rate to the rate control IP address specified in the configuration parameters.

Such embodiments may further comprise a means for activating an intermediate layer information set between the client and a serving support node in the network, wherein the client may be a mobile station. Furthermore, the rate control configuration parameters may be selected from the group consisting of a rate control method indicator, a rate control identifier, a rate control IP address, and rate control port numbers, and the transcoding rate parameters may be selected from the group consisting of a rate control identifier and a bit rate.

In such embodiments, the application layer protocol may be the SIP [Session Initiated Protocol], the first intermediate protocol may be Radio Access Network Application Part (RANAP), and the second intermediate protocol may be lu UP. Additionally, the session may occur within a network which is a Universal Mobile Telephony System (UMTS), a General Packet Radio Service (GPRS) system, or a WLAN network.

## Claims

1. A method for negotiating the transmission flow rate of data bits in a data bit transfer session from a first mobile entity (358 a) to a second mobile entity, the session involving bit transmission over at least one wireless communications link (366 a, 366 b), the method **characterized in that** it comprises:
providing a first radio control node (356 a) in communication with the first mobile entity (358 a) for controlling the bit transmission rates of a first radio link (366a) to the first mobile entity,
providing a second radio control node (356 b) in communication with the second mobile entity, for controlling bit transmission rates of a second radio link (366 b) to the second mobile entity,
resolving addressing between the first radio control node (356 a) and the second radio control node (356 b) to allow communication between the first radio control node (356 a) and the second radio control node,
sending rate control parameters for the first link to the second radio control node,
sending rate control parameters for the second link to the first radio control node,
matching the rate control parameters to obtain an actual bit transmission rate,
sending an indicator of the actual bit transmission rate to the first mobile entity (358 a) and to the second mobile entity (358 b) so that the bit transmission can occur at the bit transmission rate.

2. The method of claim 1 wherein the resolving further comprises
initiating a session by sending set up commands in accordance with an application layer protocol between the first mobile entity (358 a) (UE-A358 a) and the second mobile entity (358 b) (UE-B 358 b),
establishing an intermediate layer information set between the first mobile entity (358 a) (UE-A358 a) and a serving node,
receiving, by the first radio control node, rate control configuration parameters for the second mobile entity (358 b) according to a first intermediate layer protocol; and
receiving, by the second radio control node, rate control configuration parameters for the first mobile entity (358 a) according to a first intermediate layer protocol.

3. The method of claim 2, further comprising:
examining, by the first radio control node, the headers of messages addressed to the first mobile entity (358 a) to obtain the available transmission rates for the second radio link, and
examining, by the second radio control node, the headers of message addressed to the second mobile entity (358 b) to obtain the available transmission rates for the first radio link (366a).

4. The method of claim 1 further comprising:
providing a proxy whereby all messages intended to received by the first mobile entity (358 a) from the second mobile entity, all messages received by the second mobile entity (358 b) from the first mobile entity, are sent through and forwarded on by the proxy.

5. The method of claim 4, further comprising:
examining, by the first radio control node, the headers of messages addressed to the first mobile entity (358 a) to obtain rate control configuration parameters relating to the second mobile entity, and
examining, by the second radio control node, the headers of message addressed to the second mobile entity (358 b) to obtain rate control configuration parameters relating to the first mobile entity.

6. The method of claim 1 further comprising providing a first proxy whereby all messages sent by the first mobile entity (358 a) to the second mobile entity, all messages sent by the first radio control node (356 a) to the second radio control node, are sent to and forwarded on by the first proxy.

7. The method of claim 6 further comprising providing a second proxy whereby all messages sent by the second mobile entity (358 b) (UE-B 358 b) to the first mobile entity (358 a) (UE-A358 a), and all messages sent by the second radio control node (356 b) to the first radio control node (356 a) are sent to and forwarded on by the second proxy.

8. The method of claims 1 through 7 wherein the application layer protocol is a Session Initiation Protocol, the first intermediate layer protocol is Radio Access Network Application Part (RANAP), and the second intermediate layer protocol is lu UP.

## Patentansprüche

1. Verfahren zum Aushandeln der Übertragungsflussrate von Datenbits in einer Datenbit-Übertragungssitzung von einer ersten Mobileinheit (358a) zu einer zweiten Mobileinheit, wobei die Sitzung Bitübertragung über mindestens einen drahtlosen Kommunikationslink (366a, 366b) einschließt, wobei das Verfahren **gekennzeichnet ist durch** Umfassen:
Bereitstellen eines ersten Funksteuerknotens (356a) in Kommunikation mit der ersten Mobileinheit (358a) zum Steuern von Bitübertragungsraten eines ersten Funklinks (366a) zu der ersten Mobileinheit,
Bereitstellen eines zweiten Funksteuerknotens (356b) in Kommunikation mit der zweiten Mobileinheit, zum Steuern von Bitübertragungsraten eines zweiten Funklinks (366b) zu der zweiten Mobileinheit,
Auflösen von Adressierung zwischen dem ersten Funksteuerknoten (356a) und dem zweiten Funksteuerknoten (356b), um Kommunikation zwischen dem ersten Funksteuerknoten (356a) und dem zweiten Funksteuerknoten zu ermöglichen,
Senden von Ratensteuerparametern für den ersten Link zu dem zweiten Funksteuerknoten,
Senden von Ratensteuerparametern für den zweiten Link zu dem ersten Funksteuerknoten,
Abgleichen der Funksteuerparameter, um eine tatsächliche Bitübertragungsrate zu erlangen,
Senden eines Indikators für die tatsächliche Bitübertragungsrate zu der ersten Mobileinheit (358a) und zu der zweiten Mobileinheit (358b), so dass die Bitübertragung mit der Bitübertragungsrate stattfinden kann.

2. Verfahren nach Anspruch 1, wobei das Auflösen ferner umfasst:
Initiieren einer Sitzung durch Senden eines Setup-Befehls in Übereinstimmung mit einem Anwendungsschichtprotokoll zwischen der ersten Mobileinheit (358a) (UE-A 358a) und der zweiten Mobileinheit (358b) (UE-B 358b),
Einrichten eines Zwischenschichtinformationssatzes zwischen der ersten Mobileinheit (358a) (UE-A 358a) und einem bedienenden Knoten,
Empfangen, durch den ersten Funksteuerknoten, von Funksteuer-Konfigurationsparametern für die zweite Mobileinheit (358b) in Übereinstimmung mit einem ersten Zwischenschichtprotokoll; und
Empfangen, durch den zweiten Funksteuerknoten, von Ratensteuer-Konfigurationsparametern für die erste Mobileinheit (358a) in Übereinstimmung mit einem ersten Zwischenschichtprotokoll.

3. Verfahren nach Anspruch 2, ferner umfassend:
Prüfen, durch den ersten Funksteuerknoten, der Köpfe von Nachrichten, die zu der ersten Mobileinheit (358a) adressiert sind, um die verfügbaren Übertragungsraten für den zweiten Funklink zu erlangen, und
Prüfen, durch den zweiten Funksteuerknoten, der Köpfe von Nachrichten, die zu der zweiten Mobileinheit (358b) adressiert sind, um die verfügbare Übertragungsraten für den ersten Funklink (366a) zu erlangen.

4. Verfahren nach Anspruch 1, ferner umfassend:
Bereitstellen eines Proxys, wodurch alle Nachrichten, die zum Empfang durch die ersten Mobileinheit (358a) von der zweiten Mobileinheit vorgesehen sind, alle Nachrichten, die durch die zweite Mobileinheit (358b) von der ersten Mobileinheit empfangen werden, gesendet werden und weitergeleitet werden durch den Proxy.

5. Verfahren nach Anspruch 4, ferner umfassend:
Prüfen, durch den ersten Funksteuerknoten, der Köpfe von Nachrichten, die zu der ersten Mobileinheit (358a) adressiert sind, um Ratensteuer-Konfigurationsparameter zu erlangen bezüglich der zweiten Mobileinheit, und
Prüfen, durch den zweiten Funksteuerknoten, der Köpfe von Nachrichten, die zu der zweiten Mobileinheit (358b) adressiert sind, um Ratensteuer-Konfigurationsparameter zu erlangen bezüglich der ersten Mobileinheit.

6. Verfahren nach Anspruch 1, ferner umfassend Bereitstellen eines ersten Proxy, wodurch alle Nachrichten, die durch die erste Mobileinheit (358a) zu der zweiten Mobileinheit gesendet werden, alle Nachrichten, die durch den ersten Funksteuerknoten (356a) zu dem zweiten Funksteuerknoten gesendet werden, gesendet werden und weitergeleitet werden durch den ersten Proxy.

7. Verfahren nach Anspruch 6, ferner umfassend Bereitstellen eines zweiten Proxy, wodurch alle Nachrichten, die durch die zweite Mobileinheit (358b) (UE-B 358b) zu der ersten Mobileinheit (358a) (UE-A 358a) gesendet werden, und alle Nachrichten, die durch den zweiten Funksteuerknoten (356b) zu dem ersten Funksteuerknoten (356a) gesendet werden, gesendet werden und weitergeleitet werden durch den zweiten Proxy.

8. Verfahren nach Anspruch 1 bis 7, wobei das Anwendungsschichtprotokoll ein Sitzungs-Initiierungsprotokoll ist, das erste Zwischenschichtprotokoll der Funkzugriffsnetzanwendungsteil (Radio Access Network Application Part) (RANAP) ist, und zweite Zwischenschichtprotokoll lu UP ist.

## Revendications

1. Procédé de négociation du débit d'émission de bits de données dans une session de transfert de bits de données entre une première entité mobile (358a) et une seconde entité mobile, la session comprenant l'émission de bits sur au moins une liaison de communication sans fil (366a, 366b), le procédé étant **caractérisé par** les étapes consistant à :
fournir un premier noeud de commande radio (356a) en communication avec la première entité mobile (358a), afin de commander les débits d'émission de bits d'une première liaison radio (366a) vers la première entité mobile ;
fournir un second noeud de commande radio (356b) en communication avec la seconde entité mobile, afin de commander les débits d'émission de bits d'une seconde liaison radio (366b) vers la seconde entité mobile ;
résoudre l'adressage entre le premier noeud de commande radio (356a) et le second noeud de commande radio (356b) afin de permettre la communication entre le premier noeud de commande radio (356a) et le second noeud de commande radio ;
envoyer des paramètres de commande du débit pour la première liaison au second noeud de commande radio ;
envoyer des paramètres de commande du débit pour la seconde liaison au premier noeud de commande radio ;
faire correspondre les paramètres de commande du débit pour obtenir un débit réel d'émission de bits ;
envoyer un indicateur du débit réel d'émission de bits à la première entité mobile (358a) et à la seconde entité mobile (358b), afin que l'émission de bits puisse se produire avec le débit d'émission de bits.

2. Procédé selon la revendication 1, dans lequel l'étape de résolution comprenant en outre les étapes consistant à :
lancer une session en envoyant des instructions d'établissement en fonction d'un protocole de la couche applicative, entre la première entité mobile (358a) (UE-A 358a) et la seconde entité mobile (358b) (UE-B 358b) ;
établir un ensemble d'informations de couche intermédiaire entre la première entité mobile (358a) (UE-A 358a) et un noeud de desserte ;
recevoir par le premier noeud de commande radio des paramètres de configuration de commande du débit pour la seconde entité mobile (358b), en fonction d'un premier protocole de couche intermédiaire ; et
recevoir par le second noeud de commande radio des paramètres de configuration de commande du débit pour la première entité mobile (358a), en fonction d'un premier protocole de couche intermédiaire.

3. Procédé selon la revendication 2, comprenant en outre les étapes consistant à :
examiner par le premier noeud de commande radio les entêtes des messages adressés à la première entité mobile (358a) afin d'obtenir les débits d'émission disponibles pour la seconde liaison radio ; et
examiner par le second noeud de commande radio les entêtes des messages adressés à la seconde entité mobile (358b) afin d'obtenir les débits d'émission disponibles pour la première liaison radio (366a).

4. Procédé selon la revendication 1, comprenant en outre l'étape consistant à :
fournir un serveur mandataire, afin que tous les messages destinés à être reçus par la première entité mobile (358a) en provenance de la seconde entité mobile et tous les messages reçus par la seconde entité mobile (358b) en provenance de la première entité mobile soit envoyés via le serveur mandataire et ré-acheminés par celui-ci.

5. Procédé selon la revendication 4, comprenant en outre les étapes consistant à :
examiner par le premier noeud de commande radio les entêtes des messages adressés à la première entité mobile (358a) afin d'obtenir les débits d'émission disponibles pour la seconde entité mobile ; et
examiner par le second noeud de commande radio les entêtes des messages adressés à la seconde entité mobile (358b) afin d'obtenir les débits d'émission disponibles pour la première entité mobile.

6. Procédé selon la revendication 1, comprenant en outre l'étape consistant à fournir un premier serveur mandataire, afin que tous les messages envoyés par la première entité mobile (358a) à la seconde entité mobile et tous les messages envoyés par le premier noeud de commande radio (356a) au second noeud de commande radio soit envoyés via le premier serveur mandataire et ré-acheminés par celui-ci.

7. Procédé selon la revendication 6, comprenant en outre l'étape consistant à fournir un second serveur mandataire, afin que tous les messages envoyés par la seconde entité mobile (358b) (UE-B 358b) à la première entité mobile (358a) (UE-A 358a) et tous les messages envoyés par le second noeud de commande radio (356b) au premier noeud de commande radio (356a) soit envoyés via le second serveur mandataire et ré-acheminés par celui-ci.

8. Procédé selon les revendications 1 à 7, dans lequel le protocole de la couche applicative est un protocole de lancement de session (SIP pour « *Session Initiation Protocol* »), le premier protocole de couche intermédiaire est la partie applicative du réseau d'accès radio (RANAP, pour « *Radio Access Network Application Part* ») et le second protocole de couche intermédiaire est le protocole Iu UP.
